# EUROPÄISCHE PATENTSCHRIFT

(11) **EP 1 453 272 B1**
(45) Veröffentlichungstag und Bekanntmachung des Hinweises auf die Patenterteilung: **25.12.2013**
(21) Anmeldenummer: 04001333.6
(22) Anmeldetag: 22.01.2004
(51) Int. Cl.: G07B 15/00, G01D 4/00, H04L 29/06

(54) **Anordnung und Methode zum Erfassen und gesicherten Speichern von Erfassungswerten**
System and method for monitoring and secure storing of detector values
Appareil et méthode pour détecter et stocker des valeurs de contrôle

(30) Priorität: 22.01.2003 DE 10302449
(43) Veröffentlichungstag der Anmeldung: 01.09.2004
(73) Patentinhaber: Francotyp-Postalia GmbH, 16547 Birkenwerder (DE); FlexSecure GmbH, 64297 Darmstadt (DE); ConSens Management GmbH, 61352 Bad Homburg (DE)
(72) Erfinder: Kampert, Werner, 22081 Hamburg (DE); Stallenberger, Erwin, 64297 Darmstadt (DE); Garrelts, Eckhard, 61250 Usingen (DE); Knee-Forrest, Paul, Dr., 44001 Louny (CZ); Kesselberg, Ulrich, 65207 Wiesbaden (DE); Lippel, Mark, 53121 Bonn (DE)
(74) Vertreter: Karlhuber, Mathias

(56) Entgegenhaltungen:
- EP-A- 0 780 801
- EP-A- 0 970 870
- WO-A-01/59711
- DE-A- 19 612 662
- US-A- 5 828 751
- US-A- 6 088 659

## Beschreibung

Die vorliegende Erfindung betrifft eine Anordnung zum Erfassen und gesicherten Speichern wenigstens eines ersten Erfassungswertes wenigstens einer ersten Erfassungsgröße gemäß dem Oberbegriff des Anspruchs 1.

Bei einem solchen ersten Erfassungswert einer ersten Erfassungsgröße kann sich beispielsweise um einen ersten Verbrauchswert eines ersten Verbrauchsgutes, beispielsweise eines Energieträgers, handeln. So sind im Zusammenhang mit der Verbrauchsmessung üblicher Energieträger eine Reihe von Anordnungen bekannt. Diese werden in der Regel dazu verwendet, in Privathaushalten oder anderen Einrichtungen bestimmte Energieverbräuche zu erfassen und zu speichern. Dabei erfolgt die Messung des Verbrauchs, also die Erfassung der ersten Erfassungsgröße, kontinuierlich, d. h. im Sinne der vorliegenden Erfindung permanent oder in vorgegebenen Zeitintervallen.

Aus der US 6,088,659 ist beispielsweise eine Anordnung bekannt, bei welcher der Stromverbrauch in einem entsprechenden Zähler erfasst und gespeichert wird sowie anschließend über eine Funkverbindung zur Weiterverarbeitung an eine Datenzentrale übermittelt wird. Die Sicherung des gespeicherten Verbrauchswerts vor unbefugtem Zugriff erfolgt üblicherweise durch ein entsprechend gesichertes Gehäuse des Zählers, welches mit entsprechenden Sensoren versehen ist, die ein unbefugtes Eindringen erfassen.

Die bekannten Anordnungen weisen jedoch den Nachteil auf, dass durch die eigentlich zum Auslesen der Verbrauchswerte vorgesehene Schnittstelle die Möglichkeit des Zugriffs auf die Sicherheitseinrichtung und damit die Möglichkeit einer Manipulation des Zählers, insbesondere des gespeicherten Verbrauchswerts, eröffnet wird.

Aus der US 5,828,751 ist eine Anordnung bekannt, bei der Messwerte einer Messeinrichtung kryptographisch abgesichert gespeichert werden.

Der vorliegenden Erfindung liegt daher die Aufgabe zu Grunde, eine Anordnung der eingangs genannten Art zur Verfügung zu stellen, welche die oben genannten Nachteile nicht oder zumindest in geringerem Maße aufweist und insbesondere einen erhöhten Schutz vor unerkannter, unbefugter Manipulation der gespeicherten Erfassungswerte gewährleistet, wobei sie einen einfachen Wechsel des Anbieters des Verbrauchsgutes ermöglicht.

Die vorliegende Erfindung löst diese Aufgabe ausgehend von einer Anordnung gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 17 durch die im kennzeichnenden Teil des Anspruchs 17 angegebenen Merkmale.

Der vorliegenden Erfindung liegt die technische Lehre zu Grunde, dass man einen erhöhten Schutz vor unerkannter unbefugter Manipulation der gespeicherten Erfassungswerte erzielt, wenn die Verarbeitungseinheit zur Überprüfung der Zugriffsberechtigung auf wenigstens einen Teil der Sicherheitseinrichtung ausgebildet ist. Die Überprüfung kann sich dabei auf einzelne, entsprechend sicherheitsrelevante Bereiche der Sicherheitseinrichtung beschränken. Sie kann sich jedoch auch auf die Überprüfung der Zugriffsberechtigung für sämtliche Bereiche der Sicherheitseinrichtung erstrecken.

Bevorzugt wird schon die Zugriffsberechtigung auf den ersten Speicher überprüft, um den unberechtigten Zugriff auf den gespeicherten ersten Erfassungswert zu verhindern. Es versteht sich jedoch, dass bei bestimmten Varianten der erfindungsgemäßen Anordnung der Zugriff auf den ersten Speicher auch ohne besondere Zugriffsberechtigung zugelassen sein kann, wenn der erste Erfassungswert in einer Weise gespeichert ist, dass nicht autorisierte Manipulationen an den gespeicherten Erfassungswert erkennbar sind. So kann der Erfassungswert beispielsweise zusammen mit einer unter Verwendung des Erfassungswerts erzeugten Authentifizierungsinformation, wie beispielsweise einem so genannten MAC (Message Authentification Code), einer digitalen Signatur oder dergleichen gespeichert werden, die in einem Bereich der Sicherheitseinrichtung erzeugt wird, für den die Zugriffsberechtigung, sofern der Zugriff überhaupt möglich ist, überprüft wird.

Durch die erfindungsgemäßen Maßnahmen wird in vorteilhafter Weise erreicht, dass eine unbefugte Manipulation des gespeicherten ersten Erfassungswerts zum einen entweder mangels Zugriff auf den gespeicherten Erfassungswert überhaupt nicht möglich ist oder bei einer Überprüfung zumindest nicht unerkannt bleibt.

Bei der Schnittstelleneinrichtung kann es sich um eine beliebige Schnittstelle handeln, über die eine Kommunikation mit der Verarbeitungseinheit und damit ein Zugriff auf die Daten der Sicherheitseinrichtung möglich ist. Es versteht sich, dass bei gewissen Varianten der erfindungsgemäßen Anordnung auch mehrere derartige Schnittstelleneinrichtungen vorgesehen sein können. Sofern über diese die Kommunikation mit sicherheitsrelevanten Bereichen der Sicherheitseinrichtung möglich ist, erfolgt dann gegebenenfalls für jede dieser Schnittstelleneinrichtungen eine erfindungsgemäße Überprüfung der Zugriffsberechtigung.

Die Überprüfung der Zugriffsberechtigung kann grundsätzlich in beliebiger geeigneter Weise erfolgen. So ist es beispielsweise möglich, ein Passwortsystem oder dergleichen zu implementieren. Bevorzugt ist vorgesehen, dass die Verarbeitungseinheit zur Überprüfung der Zugriffsberechtigung unter Einsatz kryptographischer Mittel ausgebildet ist. Hierbei können beispielsweise digitale Signaturen und kryptographische Zertifikate zur Anwendung kommen. Dies ist von besonderem Vorteil, da derartige kryptographische Verfahren einen besonders hohen Sicherheitsstandard gewährleisten.

Bei besonders vorteilhaften Varianten der erfindungsgemäßen Anordnung sind wenigstens zwei unterschiedliche Zugriffsberechtigungsstufen vorgesehen, die mit unterschiedlichen Zugriffsrechten auf die Sicherheitseinrichtung verknüpft sind. So lässt sich in einfacher Weise zum einen eine hierarchische Struktur mit unterschiedlich weit gehenden Zugriffsrechten implementieren. So kann beispielsweise dem Benutzer der Anordnung auf der untersten Zugriffsberechtigungsstufe als einzige Zugriffshandlung erlaubt sein, den gespeicherten Erfassungswert aus dem ersten Speicher auszulesen, während einem Administrator auf einer höheren Zugriffsberechtigungsstufe neben dem Auslesen des Erfassungswerts aus dem ersten Speicher die Modifikation weiterer Komponenten der Sicherheitseinrichtung etc. möglich ist.

Zum anderen lässt sich über die Zugriffsberechtigungsstufen auf derselben Hierarchieebene aber auch der Zugriff auf unterschiedliche Bereiche der Sicherheitseinrichtung steuern. Die Anzahl der Zugriffsberechtigungsstufen oder Klassen richtet sich dabei nach der jeweiligen Verwendung der Anordnung und der Komplexität der mit der erfindungsgemäßen Anordnung realisierbaren Anwendungen.

Bei bevorzugten Ausgestaltungen der erfindungsgemäßen Anordnung ist die Verarbeitungseinheit zum Speichern des ersten Erfassungswerts im ersten Speicher verknüpft mit einer für den Erfassungszeitpunkt des ersten Erfassungswerts charakteristischen Erfassungszeitkennung ausgebildet. Durch diese häufig auch als Zeitstempel bezeichnete Verknüpfung des gespeicherten ersten Erfassungswerts mit dem Zeitpunkt seiner Erfassung wird die Weiterverarbeitung des Erfassungswerts, beispielsweise zu Zwecken der Abrechnung aber auch zu Zwecken der Statistiker etc. deutlich erleichtert. Dies gilt insbesondere dann, wenn mehrere, zu unterschiedlichen Zeiten erfasste erste Erfassungswerte verarbeitet werden sollen.

Es versteht sich jedoch, dass es bei anderen Varianten der Erfindung ohne derartige Zeitstempel auch ausreichen kann, wenn lediglich durch geeignete Maßnahmen sichergestellt ist, dass die Chronologie der Erfassung der ersten Erfassungswerte nachvollziehbar ist. So können dem ersten Erfassungswerten beispielsweise fortlaufende Nummern zugeordnet werden, um dieses Ziel zu erreichen.

Die Ermittlung der Erfassungszeit kann auf beliebige geeignete Weise erfolgen. Bevorzugt umfasst die Sicherheitseinrichtung zur Ermittlung der Erfassungszeitkennung ein mit der Verarbeitungseinheit verbundenes Zeiterfassungsmodul. Hierbei kann es sich um eine mit der Verarbeitungseinheit verbundene integrierte Echtzeituhr handeln oder ein Modul, das über eine geeignete Kommunikationsverbindung zu einer entsprechenden Instanz die Echtzeit abfragt. Die integrierte Echtzeituhr kann dabei gegebenenfalls von Zeit zu Zeit mit einer entsprechend genauen Zeitquelle synchronisiert werden.

Bei bevorzugten Varianten der erfindungsgemäßen Anordnung ist vorgesehen, dass die Verarbeitungseinheit zum Absichern des gespeicherten ersten Erfassungswerts und zusätzlich oder alternativ der Erfassungszeitkennung durch kryptographische Mittel ausgebildet ist. Hierdurch kann sichergestellt werden, dass unberechtigte Manipulationen an den so abgesicherten Daten bei einer späteren Überprüfung festgestellt werden können. Für die Absicherung können wiederum beliebige bekannte kryptographische Verfahren zur Anwendung kommen. Besonders geeignet ist auch hier wieder die Anwendung digitaler Signaturen, die unter Verwendung der abzusichernden Daten erzeugt werden.

Bei besonders vorteilhaften Ausgestaltungen der erfindungsgemäßen Anordnung ist die Sicherheitseinrichtung zum Speichern einer Anzahl von ersten Erfassungswerten der ersten Erfassungsgröße ausgebildet. Hiermit lassen sich, insbesondere wenn diese ersten Erfassungswerte mit einem entsprechenden Zeitstempel, also einer Erfassungszeitkennung versehen sind, eine Reihe von Überprüfungen und statistischen Auswertungen bei der Weiterverarbeitung der gemessenen Erfassungswerte vornehmen. Insbesondere lässt sich hiermit auch anhand in der Vergangenheit ermittelter statistischer Daten eine Plausibilitätsprüfung für die Erfassung einzelner oder mehrerer Erfassungswerte durchführen. Diese Plausibilitätsprüfung kann sowohl zur Funktionsüberwachung der Erfassungseinheit, beispielsweise einer Messeinrichtung, als auch zur Erfassung von Betrugsversuchen oder dergleichen herangezogen werden.

Insbesondere kann durch geeignete Maßnahmen sichergestellt sein, dass die Kontinuität. der Erfassungswerte nachprüfbar ist, d. h. erkennbar ist, ob eine lückenlose Reihe der Erfassungswerte vorliegt oder einzelne Erfassungswerte - sei es infolge einer Fehlfunktion oder eines Betrugsversuchs - fehlen. Dies kann in einfacher Weise z. B. dadurch realisiert sein, dass den Erfassungswerten fortlaufende Nummern zugeordnet werden, die dann bevorzugt ebenfalls wieder entsprechender Weise durch kryptographische Mittel abgesichert sind. Sofern die Erfassung der Erfassungswerte in vorgegebenen Zeitintervallen erfolgt, kann hierzu aber auch beispielsweise der Zeitstempel ausreichen.

Bei besonders günstigen Varianten der erfindungsgemäßen Anordnung ist wenigstens eine zweite Erfassungseinrichtung zur Erfassung wenigstens eines zweiten Erfassungswerts der ersten Erfassungsgröße vorgesehen. Die Sicherheitseinrichtung ist dann zum Speichern des zweiten Erfassungswerts in dem ersten Speicher ausgebildet, wobei die oben beschriebenen Sicherungsmaßnahmen ergriffen werden können, sodass in Bezug auf das vor unbefugtem Zugriff gesicherte Speichern lediglich auf die obigen Ausführungen verwiesen werden soll. Mit diesen Varianten ist es möglich, auch größere Systeme mit mehreren Erfassungsorten der Erfassungsgröße, beispielsweise mehreren Messstellen für den Verbrauch eines Verbrauchsgutes, mit einer reduzierten Anzahl von Sicherheitseinrichtungen, gegebenenfalls sogar mit einer einzigen Sicherheitseinrichtung zu betreiben. So kann beispielsweise der Energieverbrauch in einem größeren Haus mit mehreren Parteien, d. h. getrennt zu erfassenden Verbrauchseinheiten, durch eine entsprechende Anzahl dezentraler Erfassungseinrichtungen erfasst werden, die alle mit einer einzigen Sicherheitseinrichtung verbunden sind.

Um die Trennung der ersten und zweiten Erfassungswerte sicherzustellen, kann vorgesehen sein, dass die ersten und zweiten Erfassungswerte in unterschiedlichen Speicherbereichen des ersten Speichers abgelegt werden. Hierbei können insbesondere unterschiedliche Zugriffsberechtigungen für die unterschiedlichen Speicherbereiche definiert sein, um sicherzustellen, dass nur die jeweils autorisierten Personen bzw. Einrichtungen auf den entsprechenden Speicherbereich zugreifen können.

Besonders vorteilhaft ist es jedoch, wenn die Verarbeitungseinheit zum Speichern des ersten Erfassungswerts verknüpft mit einer für die erste Erfassungseinrichtung charakteristischen ersten Erfassungseinrichtungskennung und zum Speichern des zweiten Erfassungswerts verknüpft mit einer für die zweite Erfassungseinrichtung charakteristischen zweiten Erfassungseinrichtungskennung ausgebildet ist. Mit dieser eindeutigen Zuordnung zwischen der Erfassungseinrichtung und dem durch sie erfassten Erfassungswerts ist eine besonders einfache und zuverlässige Trennung möglich, welche die spätere Weiterverarbeitung erheblich erleichtert.

Um hier einen unbefugten Zugriff auf die entsprechenden Erfassungswerte durch Personen oder Einrichtungen, die grundsätzlich zu Zugriff auf den ersten Speicher autorisiert sind, zu vermeiden, kann für die ersten und zweiten Erfassungswerte vorgesehen sein, dass sie auf unterschiedliche Weise verschlüsselt gespeichert sind. Die Entschlüsselung kann dann jeweils nur durch die entsprechend autorisierte Person bzw. Einrichtung, welche beispielsweise den entsprechenden Entschlüsselungsschlüssel besitzt.

Es versteht sich, dass auch hier wiederum eine kryptographische Absicherung der gespeicherten Daten, wie sie bereits oben beschrieben wurde, vorgesehen sein kann, um die unerkannte Manipulation dieser Daten wirksam zu verhindern.

Bei weiteren günstigen Ausgestaltungen der erfindungsgemäßen Anordnung ist vorgesehen, dass die erste Erfassungseinrichtung zur Erfassung wenigstens eines dritten Erfassungswerts einer zweiten Erfassungsgröße ausgebildet ist. Alternativ kann eine dritte Erfassungseinrichtung zur Erfassung wenigstens eines dritten Erfassungswerts einer zweiten Erfassungsgröße vorgesehen sein. In beiden Fällen ist die Sicherheitseinrichtung zum vor unbefugtem Zugriff gesicherten Speichern des dritten Erfassungswerts in dem ersten Speicher ausgebildet, wobei auch hier wieder bevorzugt die oben beschriebenen Sicherungsmaßnahmen ergriffen werden.

Hierdurch ist es möglich, mit einer einzigen Sicherheitseinrichtung die Erfassung und gesicherte Speicherung der Erfassungswerte für unterschiedliche Erfassungsgrößen, in Form unterschiedlicher Verbrauchsgüter, zu realisieren. So kann für eine Verbrauchseinheit wie eine Wohnung oder dergleichen beispielsweise durch unterschiedliche Erfassungseinrichtungen der Verbrauch unterschiedlicher Energieträger wie Strom, Gas, Wasser erfasst und durch eine einzige Sicherheitseinrichtung gesichert gespeichert und zur weiteren autorisierten Verarbeitung zur Verfügung gestellt werden.

Um die Trennung der ersten und dritten Erfassungswerte sicherzustellen, kann auch hier wieder vorgesehen sein, dass die ersten und dritten Erfassungswerte in unterschiedlichen Speicherbereichen des ersten Speichers abgelegt werden. Besonders vorteilhaft ist es jedoch auch hier, wenn die Verarbeitungseinheit zum Speichern ersten Erfassungswerts verknüpft mit einer für die erste Erfassungsgröße charakteristischen ersten Erfassungsgrößenkennung und zum Speichern des dritten Erfassungswerts verknüpft mit einer für die zweite Erfassungsgröße charakteristischen zweiten Erfassungsgrößenkennung ausgebildet ist. Mit dieser eindeutigen Zuordnung zwischen der Erfassungseinrichtung und der durch sie erfassten Erfassungsgröße ist eine besonders einfache und zuverlässige Trennung möglich, welche die spätere Weiterverarbeitung der gespeicherten Daten erheblich erleichtert. Auch hier können natürlich wieder die oben dargelegten Maßnahmen zur Vermeidung unbefugten Zugriffs auf die ersten und dritten Erfassungswerte vorgenommen werden.

Es versteht sich im übrigen, dass auch hier wiederum eine kryptographische Absicherung der gespeicherten Daten, wie sie bereits oben beschrieben wurde, vorgesehen sein kann, um die unerkannte Manipulation diese Daten wirksam zu verhindern.

Bei besonders bevorzugten Varianten der erfindungsgemäßen Anordnung weist die Verarbeitungseinheit wenigstens einen ersten Betriebsmodus und einen zweiten Betriebsmodus auf. Weiterhin ist sie zum Umschalten zwischen dem ersten und zweiten Betriebsmodus ausgebildet, wobei dieses Umschalten veranlasst durch einen Umschaltbefehl erfolgt. Bevorzugt ist die Verarbeitungseinheit dabei zur Überprüfung eines Umschaltkriteriums und zur Erzeugung des Umschaltbefehls in Abhängigkeit vom Ergebnis der Überprüfung des Umschaltkriteriums ausgebildet. Das Umschaltkriterium ist dabei in einem mit der Verarbeitungseinheit verbundenen zweiten Speicher gespeichert.

Hiermit lassen sich in einfacher Weise Anwendungsszenarien realisieren, bei denen die Anordnung in Abhängigkeit vom Eintreten vorgegebener oder vorgebbarer Bedingungen unterschiedliche Funktionen ausführt. So kann beispielsweise bei Eintreten entsprechender vorgegebener oder vorgebbarer Bedingungen eine Benachrichtigungsroutine initiiert werden, mit welcher entsprechende Personen oder Einrichtungen vom Eintreten der Bedingung in Kenntnis gesetzt werden. So kann bei der Verbrauchserfassung der Verbraucher des Verbrauchsgutes, der Anbieter des Verbrauchsgutes oder ein Dritter vom Eintreten der Bedingung in Kenntnis gesetzt werden. Dies kann über beliebige Benachrichtigungsmittel, wie optische oder akustische Anzeigen, E-Mail, Fax, SMS etc. erfolgen. So kann der Verbraucher beispielsweise über einen ungewöhnlich hohen oder vom üblichen Verbrauchsprofil abweichenden Verbrauch oder das Überschreiten eines von ihm selbst gesetzten Verbrauchlimits informiert werden.

Bei weiteren bevorzugten Varianten der erfindungsgemäßen Anordnung ist vorgesehen, dass eine mit der Verarbeitungseinheit verbundene, wenigstens in dem zweiten Betriebsmodus von der Verarbeitungseinheit angesteuerte Beeinflussungseinrichtung zur Beeinflussung der ersten Erfassungsgröße vorgesehen ist. So kann bei einer Verbrauchserfassung eine Verbrauchsbeeinflussungseinrichtung zur Beeinflussung des Verbrauchs des ersten Verbrauchsgutes vorgesehen sein. Durch diese Verbrauchsbeeinflussungseinrichtung kann beispielsweise beim Eintreten bestimmter Bedingungen, beispielsweise dem Unterschreiten eines bestimmten Guthabens, dem Überschreiten eines bestimmten Kreditrahmens oder dem Überschreiten eines bestimmten Verbrauchswerts, ein Sperren des Verbrauchs erfolgen. Gegebenenfalls kann rechtzeitig vor Eintreten dieser Bedingung eine der oben beschriebenen Benachrichtigungsroutinen eingeleitet werden, um den Verbraucher beispielsweise über die drohende Sperrung zu informieren.

Bei anderen Varianten, bei denen die Erfassung eines Betriebsparameters einer Einrichtung als Erfassungsgröße erfolgt, kann eine Beeinflussung des Betriebsparameters vorgesehen sein. So kann beispielsweise beim Eintreten bestimmter Bedingungen, beispielsweise dem Unter- oder Überschreiten eines bestimmten Grenzwertes für den Betriebsparameter, ein entsprechendes Gegensteuern erfolgen bzw. eingeleitet werden, welches den Betriebsparameter wieder in einen vorgegebenen Bereich bringen soll. Gegebenenfalls kann rechtzeitig vor Eintreten der genannten Bedingung eine der oben beschriebenen Benachrichtigungsroutinen eingeleitet werden, um entsprechende Personen oder Einrichtungen über das drohende Eintreten der Bedingung zu informieren.

Vorzugsweise ist das Umschaltkriterium durch Zugriff über die erste Schnittstelleneinrichtung auf den zweiten Speicher vorgebbar und zusätzlich oder alternativ veränderbar, um das Umschaltkriterium in vorteilhafter Weise beeinflussen zu können bzw. auf geänderte Umstände reagieren zu können.

Bei besonders vorteilhaften Varianten der erfindungsgemäßen Anordnung umfasst die Sicherheitseinrichtung ein mit der Verarbeitungseinheit verbundenes Quittungsmodul mit einem dritten Speicher. Weiterhin ist die Verarbeitungseinheit zur Erstellung einer Quittung für einen Zugriff auf die Sicherheitseinrichtung, insbesondere für einen Zugriff auf den ersten Speicher, und zum Speichern der ersten Quittung in dem dritten Speicher ausgebildet. Hierdurch ist es in vorteilhafter Weise möglich, den Zugriff auf die Sicherheitseinrichtung zu dokumentieren und gegebenenfalls zu einem späteren Zeitpunkt auszuwerten.

Es versteht sich, dass auch hier wieder ein vor unbefugtem Zugriff gesichertes Speichern der Quittung sowie die Absicherung der Quittung durch kryptographische Mittel vorgesehen sein kann, wie sie bereits oben ausführlich beschrieben wurden, sodass an dieser Stelle nur auf die obigen Ausführungen verwiesen werden soll.

Vorzugsweise ist vorgesehen, dass die Verarbeitungseinheit zum Speichern der Quittung im zweiten Speicher verknüpft mit einer für den Zugreifer charakteristischen Zugreiferkennung ausgebildet ist. Bevorzugt handelt es sich bei dieser Zugreiferkennung um eine zweite digitale Signatur des Zugreifers, die bevorzugt unter Verwendung der Quittungsinformation erzeugt wird. Hiermit ist es in einfacher Weise möglich, die im Rahmen solcher Zugriffe vorgenommenen Modifikationen der Anordnung, insbesondere der Sicherheitseinrichtung einzelnen Zugreifern zuzuordnen. Dies ist insbesondere unter Haftungsgesichtspunkten von besonderem Vorteil.

Weiter vorzugsweise wird die Quittung mit einem Zeitstempel versehen. Hierzu ist die Verarbeitungseinheit bevorzugt zum Speichern der Quittung im zweiten Speicher verknüpft mit einer für den Zugriffzeitpunkt charakteristischen Zugriffszeitkennung ausgebildet. Es versteht sich, dass auch hier wieder dieselben Maßnahmen, insbesondere dieselben Sicherungsmaßnahmen ergriffen werden können, wie sie bereits oben im Zusammenhang mit der Erfassungszeitkennung beschrieben wurden.

Insbesondere umfasst die Sicherheitseinrichtung zur Ermittlung der Zugriffszeitkennung bevorzugt ein mit der Verarbeitungseinheit verbundenes Zeiterfassungsmodul. Weiter vorzugsweise ist die Verarbeitungseinheit zum Absichern der gespeicherten Quittung und zusätzlich oder alternativ der Zugreiferkennung sowie zusätzlich oder alternativ der Zugriffszeitkennung durch kryptographische Mittel ausgebildet. Hier kann insbesondere wiederum eine Absicherung durch eine dritte digitale Signatur erfolgen, die bevorzugt unter Verwendung der abzusichernden Daten erzeugt wird.

Erfindungsgemäß weist die Sicherheitseinrichtung zur Auswahl eines Anbieters eines ersten Verbrauchsgutes ein mit der Verarbeitungseinheit verbundenes Auswahlmodul auf. Der Verbrauch des ersten Verbrauchsgutes stellt hier die erste Erfassungsgröße dar. Weiterhin ist die Verarbeitungseinheit zum Speichern des ersten Verbrauchswerts als erstem Erfassungswert im ersten Speicher verknüpft mit einer für den ausgewählten Anbieter des ersten Verbrauchsgutes charakteristischen Anbieterkennung ausgebildet. Hierdurch ist es in einfacher Weise möglich, nach bestimmten Kriterien einen bestimmten Anbieter auszuwählen und diesem Anbieter die ermittelten Verbrauchswerte zuzuordnen, um sie beispielsweise später gegenüber diesem Anbieter abzurechnen.

So kann beispielsweise vorgesehen sein, dass ein Verbraucher über eine bestimmte Schnittstelle der Sicherheitseinrichtung nach Belieben einen Anbieter des Verbrauchsgutes, beispielsweise einen bestimmten Stromlieferanten, auswählt, dem die nach der Auswahl erfassten Verbrauchswerte in der beschriebenen Weise zugeordnet werden. Hierbei ist es natürlich möglich, bestimmte Vorgaben oder Grenzen hinsichtlich der Häufigkeit der Anbieterwechsel etc. zu setzen.

Auch hier ist bevorzugt wieder vorgesehen, dass die Verarbeitungseinheit zum Absichern der Anbieterkennung durch kryptographische Mittel ausgebildet ist, wie dies bereits oben anhand anderer Kennungen ausführlich beschrieben wurde. Hierbei kann die Absicherung insbesondere wieder durch eine vierte digitale Signatur erfolgen.

Bei besonders vorteilhaften Varianten der erfindungsgemäßen Anordnung ist vorgesehen, dass die Verarbeitungseinheit zur Überprüfung eines Auswahlkriteriums und zur Auswahl des Anbieters in Abhängigkeit vom Ergebnis der Überprüfung des Auswahlkriteriums ausgebildet ist, wobei das Auswahlkriterium in einem mit der Verarbeitungseinheit verbundenen vierten Speicher gespeichert ist. Hiermit ist es z. B. in einfacher Weise möglich, die Verbrauchskosten zu minimieren, indem durch Vergleich der Gebührentabellen unterschiedlicher Anbieter derjenige ausgewählt wird, der das Verbrauchsgut zum aktuellen Zeitpunkt zum günstigsten Preis anbietet. Diese Abfrage kann in vorgegebenen Intervallen erfolgen. Zudem kann eine regelmäßig von der Verarbeitungseinheit initiierte Aktualisierung der Gebührentabellen ebenso vorgesehen sein wie regelmäßige Updates seitens der Anbieter, die über eine entsprechende Kommunikationsverbindung zur Verarbeitungseinheit gelangen.

Wie bereits erwähnt, kann eine beliebige Auswahl durch den Verbraucher vorgesehen sein. Hierzu ist bevorzugt eine mit der Verarbeitungseinheit verbundene Auswahleingabeeinrichtung vorgesehen, wobei das Auswahlkriterium durch einen Benutzer über die Auswahleingabeeinrichtung durch Zugriff auf den vierten Speicher vorgebbar und zusätzlich oder alternativ veränderbar ist.

Um diese Auswahl auch zu einem späteren Zeitpunkt noch nachvollziehen zu können, ist bei bevorzugten Varianten der erfindungsgemäßen Anordnung vorgesehen, dass die Verarbeitungseinheit zum Speichern des ersten Verbrauchswerts im ersten Speicher verknüpft mit einer für den auswählenden Benutzer charakteristischen Benutzerkennung ausgebildet ist. Auch hier können wieder die oben beschriebenen Absicherungsmechanismen verwendet werden. Bevorzugt ist daher die Verarbeitungseinheit zum Absichern der Benutzerkennung durch kryptographische Mittel, insbesondere durch eine fünfte digitale Signatur, ausgebildet.

Bei bevorzugten Ausführungen der erfindungsgemäßen Anordnung umfasst die Sicherheitseinrichtung ein mit der Verarbeitungseinheit verbundenes Kryptographiemodul, welches dazu ausgebildet ist, der Verarbeitungseinheit unter Verwendung wenigstens erster Kryptographiedaten kryptographische Mittel für wenigstens eine Sicherheitsanwendung zur Verfügung zu stellen, wobei die ersten Kryptographiedaten in einem fünften Speicher des Kryptographiemoduls gespeichert sind und wenigstens einen ersten kryptographischen Algorithmus umfassen. Hierdurch ist in einfacher Weise eine entsprechend zuverlässige Absicherung sowohl zu speichernder Daten als auch zu übertragender Daten möglich. Unter Nutzung des Kryptographiemoduls können dann die für die unterschiedlichen Module (Zeiterfassungsmodul, Quittungsmodul etc) und Funktionen der Sicherheitseinrichtung beschriebenen kryptographischen Mittel zur Verfügung gestellt werden.

So kann das Kryptographiemodul zum einen zur Verschlüsselung zu speichernder Daten verwendet werden als auch zur Verschlüsselung zu sendender Daten. Beispielsweise können die Daten, die über die erste Schnittstelle ausgelesen bzw. Übertragen werden durch ein entsprechendes kryptographisches Verfahren mit einem entsprechenden kryptographischen Algorithmus verschlüsselt werden. Es versteht sich, dass je nach Anwendung, also beispielsweise je nachdem, ob Daten versandt oder gespeichert werden sollen, auch unterschiedliche kryptographische Verfahren angewendet werden können.

Neben dem kryptographischen Algorithmus und einem oder mehreren entsprechenden kryptographischen Schlüsseln umfassen die Kryptographiedaten bevorzugt weitere Daten, wie beispielsweise ein oder mehrere kryptographische Zertifikate entsprechender Zertifizierungsinstanzen sowie gegebenenfalls ein oder mehrere eigene kryptographische Zertifikate der Sicherheitseinrichtung.

Bei bevorzugten Varianten der erfindungsgemäßen Anordnung ist die Sicherheitseinrichtung zum Austausch wenigstens eines Teils der ersten Kryptographiedaten ausgebildet, um in vorteilhafter Weise eine einfache und dauerhaft zuverlässige Sicherung der Daten zu gewährleisten. Hierbei kann insbesondere vorgesehen sein, dass neben den kryptographischen Schlüsseln und kryptographischen Zertifikaten auch der jeweils verwendete kryptographische Algorithmus ausgetauscht werden kann, um das System in einfacher Weise an geänderte Sicherheitsanforderungen anpassen zu können.

Die Implementierung und der Austausch der Kryptographiedaten erfolgt unter Nutzung der ersten Schnittstelleneinrichtung oder einer weiteren Schnittstelleneinrichtung bevorzugt im Rahmen einer so genannten Public Key Infrastructure (PKI), wie sie hinlänglich bekannt ist und daher an dieser Stelle nicht weiter beschrieben werden soll. Es versteht sich insbesondere, dass eine entsprechende Routine zur Überprüfung der Validität der verwendeten kryptographischen Zertifikate vorgesehen ist. Geeignete derartige Überprüfungsroutinen sind ebenfalls hinlänglich bekannt und sollen daher hier nicht näher beschrieben werden

Bei bevorzugten Varianten der erfindungsgemäßen Anordnung sind die erste Erfassungseinrichtung und die Sicherheitseinrichtung in einer vor unbefugtem Zugriff geschützten sicheren Umgebung angeordnet, um in vorteilhafter Weise den unbefugten Zugriff nicht nur auf die Daten der Sicherheitseinrichtung sondern auch auf die Daten, die von und zu der ersten Erfassungseinrichtung geliefert werden, wirksam zu unterbinden.

Die sichere Umgebung kann dabei physisch durch ein oder mehrere entsprechend gesicherte Gehäuse hergestellt werden. Diese Gehäuse sind dann bevorzugt mit entsprechenden, hinlänglich bekannten Mitteln zur Erfassung von Manipulationen am Gehäuse ausgestattet. Bevorzugt erfolgt die Sicherung jedoch auch logisch durch ein entsprechend abgesichertes Kommunikationsprotokoll zwischen der ersten Erfassungseinrichtung und der Sicherheitseinrichtung. So kann beispielsweise vorgesehen sein, dass bei jeder Kommunikation zwischen der ersten Erfassungseinrichtung und der Sicherheitseinrichtung über eine entsprechend starke gegenseitige Authentifizierung ein gesicherter Kommunikationskanal aufgebaut wird. Es versteht sich, dass die erste Erfassungseinrichtung in diesem Fall über entsprechende Kommunikationsmittel verfügt, welche die beschriebene Sicherheitsfunktionalität zur Verfügung stellen.

Es versteht sich weiterhin, dass die sichere Umgebung durch solche logischen Sicherungsmechanismen auf einen beliebig großen Raum erstreckt werden kann. So können die erste Erfassungseinrichtung und die Sicherheitseinrichtung bei solchen Ausführungen innerhalb der sicheren Umgebung weit voneinander entfernt angeordnet sein. Es versteht sich weiterhin, dass die sichere Umgebung durch solche logischen Sicherungsmechanismen auch auf andere Komponenten, beispielsweise ein Datenzentrum oder dergleichen, ausgeweitet werden kann, von dem die Daten des ersten Speichers zur Weiterverarbeitung ausgelesen werden.

Bevorzugt ist daher die erste Erfassungseinrichtung in einem ersten sicheren Gehäuse und die Sicherheitseinrichtung in einem zweiten sicheren Gehäuse angeordnet, wobei die Verbindung zwischen der ersten Erfassungseinrichtung und der Sicherheitseinrichtung dann zur Herstellung der sicheren Umgebung als durch kryptographische Mittel abgesicherte Verbindung ausgebildet ist.

Es versteht sich, dass sämtliche der oben beschriebenen Module und Funktionen der Sicherheitseinrichtung durch entsprechend gestaltete Hardwaremodule realisiert sein können. Bevorzugt sind sie jedoch zumindest zum Teil als Softwaremodule gestaltet, auf welche die Verarbeitungseinheit zugreift, um die entsprechende Funktion zu realisieren. Weiterhin versteht es sich, dass die einzelnen Speicher nicht durch getrennte Speichermodule realisiert sein müssen. Vielmehr handelt es sich bevorzugt um entsprechend logisch getrennte Speicherbereiche eines einzigen Speichers, beispielsweise eines einzigen Speichermoduls.

Die vorliegende Erfindung betrifft weiterhin ein System mit einer erfindungsgemäßen Anordnung, deren die Sicherheitseinrichtung wenigstens eine mit der Verarbeitungseinheit verbundene erste Schnittstelleneinrichtung zum Zugreifen auf die Sicherheitseinrichtung aufweist, die als erste Kommunikationseinrichtung ausgebildet ist. Weiterhin ist eine von der Sicherheitseinrichtung entfernte Datenzentrale mit einer zweiten Kommunikationseinrichtung vorgesehen. Die erste Kommunikationseinrichtung und die zweite Kommunikationseinrichtung sind dabei zum Herstellen einer ersten Kommunikationsverbindung zwischen der Sicherheitseinrichtung und der Datenzentrale ausgebildet.

Hierdurch ist es möglich, aus der entfernten Datenzentrale auf die Anordnung, insbesondere deren Sicherheitseinrichtung, zuzugreifen und beispielsweise die gespeicherten Erfassungswerte auszulesen und weiter zu verarbeiten. Bevorzugt ist die Datenzentrale daher zum Auslesen der Speicherinhalte des ersten Speichers über die erste Kommunikationsverbindung ausgebildet. Ebenso ist es bei entsprechender Zugriffsberechtigung natürlich möglich, über die Datenzentrale das Verhalten der Anordnung zu beeinflussen, wie es oben bereits beschrieben wurde.

Die Datenzentrale speichert die ausgelesenen Erfassungsdaten und hält sie so für die weitere Verarbeitung bereit. Hierbei versteht es sich, dass die Erfassungsdaten gegebenenfalls in entsprechend anonymisierter Weise bereitgehalten werden, um die Anforderungen an den Datenschutz zu erfüllen.

Die weitere Verarbeitung kann in einer weiteren entfernten Datenzentrale, beispielsweise des Anbieters des entsprechenden Verbrauchsgutes erfolgen, an welche die Erfassungsdaten dann weitergegeben werden. Bevorzugt verarbeitet die Datenzentrale diese ausgelesenen Erfassungsdaten selbst schon zumindest zu einem gewissen Grad weiter.

Insbesondere kann bei Verbrauchswerten als Erfassungswerten vorgesehen sein, dass über die Datenzentrale die Verbrauchsabrechnung erfolgt. Vorzugsweise ist die Datenzentrale daher zur Erstellung einer Abrechnungsinformation in Abhängigkeit von den Speicherinhalten des ersten Speichers ausgebildet. Die Datenzentrale kann dabei von dem Anbieter des entsprechenden Verbrauchsgutes betrieben werden. Es versteht sich jedoch, dass die Datenzentrale auch von einem Dritten betrieben werden kann, der diese Dienste zur Verfügung stellt.

Wie bereits erwähnt, kann bei entsprechender Zugriffsberechtigung vorgesehen sein, dass über die Datenzentrale das Verhalten der Anordnung beeinflusst wird. Bevorzugt ist die Datenzentrale daher zur Vorgabe und zusätzlich oder alternativ zur Veränderung des oben beschriebenen Umschaltkriteriums ausgebildet.

Dabei kann insbesondere vorgesehen sein, dass bei Eintreten bestimmter Bedingungen die Erfassungsgröße durch die Datenzentrale wie oben bereits beschrieben beeinflusst wird, beispielsweise der Verbrauch des Verbrauchsgutes durch die Datenzentrale unterbunden wird. Insbesondere kann dies bei so genannten Vorauszahlungssystemen oder Prepaid-Systemen dann der Fall sein, wenn ein bestimmtes Minimalguthaben unterschritten wird. Hierzu kann in Verbindung mit den oben beschriebenen Anordnungen mit wenigstens zwei Betriebsmodi vorgesehen sein, dass der Verbrauch des ersten Verbrauchsgutes im zweiten Betriebsmodus gesperrt ist, das Umschaltkriterium das Feststellen des Unterschreitens einer im zweiten Speicher gespeicherten Guthabengrenze durch das aktuelle im zweiten Speicher gespeicherte Guthaben ist.

Hierbei ist dem Benutzer dann bevorzugt eine Möglichkeit zur einfachen und schnellen Abwendung oder Aufhebung der Sperrung gegeben. Vorzugsweise weist die Datenzentrale hierzu eine dritte Kommunikationseinrichtung auf, über die eine zweite Kommunikationsverbindung zum Verändern des aktuellen im zweiten Speicher gespeicherten Guthabens herstellbar ist. So kann beispielsweise eine Expresszahlung per Handy durch entsprechende Dienste oder Ähnliches vorgesehen sein.

Es versteht sich im übrigen, dass das erfindungsgemäße System auch mehrere erfindungsgemäße Anordnungen sowie zusätzlich oder alternativ auch mehrere Datenzentralen umfassen kann. Dies kann insbesondere dann der Fall sein, wenn über eine oder mehrere Sicherheitseinrichtungen unterschiedliche Erfassungsgrößen, insbesondere die Verbräuche unterschiedlicher Verbrauchsgüter von unterschiedlichen Anbietern, erfasst werden. Diese können dann zur weiteren Verarbeitung an unterschiedliche Datenzentralen verteilt werden.

Als Erfassungsgrößen kommen grundsätzlich beliebige in entsprechender Weise erfassbare Größen in Betracht. So können grundsätzlich beliebige Zustandsparameter oder Betriebsparameter beliebiger Einrichtungen erfasst werden. Weiterhin kann das Eintreten bestimmter Ereignisse als Erfassungsgröße erfasst werden. Erfindungsgemäß wird der Verbrauch eines Verbrauchsgutes erfasst.

Als Verbrauchsgut kommen grundsätzlich beliebige Güter oder Leistungen, insbesondere Dienstleistungen, in Frage, die sich durch eine entsprechende Verbrauchsmessung erfassen lassen. Als Beispiele seien hier Energieträger wie Strom, Brennstoffe, Wasser etc. genannt. Es lässt sich aber auch die entgeltpflichtige Nutzung beliebiger Einrichtungen erfassen. Hier seien als Beispiele Telekommunikationseinrichtungen, bestimmte Geräte, wie beispielsweise Baumaschinen oder Fahrzeuge, oder aber auch Spieleinrichtungen oder dergleichen genannt. Insbesondere kommt für eine Nutzung eines Gerätes, insbesondere eines Fahrzeugs, bei der die Abrechnung in Abhängigkeit von einer zurückgelegten Strecke oder dem Verweilen an einer bestimmten Position oder in einem bestimmten räumlichen Bereich erfolgt, als der oder einer der zu erfassenden Verbrauchswerte auch die Position in Frage, die über ein entsprechendes Modul zur Positionserfassung, beispielsweise ein GPS-Modul erfasst werden kann.

Insbesondere kann im Zusammenhang mit der Verbrauchsmessung auch die Erbringung bestimmter Leistungen erfasst werden. So kann beispielsweise die Dauer der Anwesenheit eines Arbeitnehmers oder eines Auftragnehmers an einer bestimmten Arbeitsstätte durch entsprechende Erfassungseinheiten erfasst werden, um den Verbrauch der Arbeitsleistung des Arbeitnehmers bzw. Auftragnehmers durch den Arbeitgeber bzw. Auftraggeber zu erfassen. Dasselbe gilt natürlich auch für die Anwesenheit von bestimmten Geräten bzw. Einrichtungen an bestimmten Einsatzorten, bei denen zusätzlich über die Erfassung bestimmter Betriebsparameter noch eine Information über die tatsächliche Nutzung des Gerätes bzw. der Einrichtung während der Anwesenheit am Einsatzort erlangt werden kann.

Die vorliegende Erfindung betrifft weiterhin ein Verfahren zum Erfassen und gesicherten Speichern wenigstens eines ersten Erfassungswertes wenigstens einer ersten Erfassungsgröße gemäß Anspruch 17, bei dem die erste Erfassungsgröße im wesentlichen kontinuierlich erfasst wird und der erste Erfassungswert in einer Sicherheitseinrichtung gespeichert wird. Der erste Erfassungswert wird dabei in einem ersten Speicher der Sicherheitseinrichtung vor unbefugtem Zugriff gesichert gespeichert. Erfindungsgemäß ist vorgesehen dass bei einem Zugriff auf die Sicherheitseinrichtung über eine erste Schnittstelleneinrichtung, insbesondere bei einem Zugriff zum Auslesen des ersten Erfassungswertes aus dem ersten Speicher, eine Überprüfung der Zugriffsberechtigung auf die Sicherheitseinrichtung erfolgt. Insbesondere erfolgt eine Überprüfung der Zugriffsberechtigung auf den ersten Speicher.

Mit dem erfindungsgemäßen Verfahren lassen sich die oben bereits beschriebenen Vorteile und Funktionen der erfindungsgemäßen Anordnung in dem oben ausführlich beschriebenen Maße erzielen, sodass diesbezüglich lediglich auf die obigen Ausführungen verwiesen werden soll. Auch hinsichtlich der bevorzugten Varianten des erfindungsgemäßen Verfahrens soll hier lediglich auf die oben ausführlich beschriebene Funktionsweise der Ausgestaltungen der erfindungsgemäßen Anordnung verwiesen werden.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen
- Figur 1: ein Blockschaltbild einer bevorzugten Ausführungsform der erfindungsgemäßen Anordnung zur Durchführung des erfindungsgemäßen Verfahrens;
- Figur 2: ein Blockschaltbild einer bevorzugten Ausführungsform des erfindungsgemäßen Systems mit der erfindungsgemäßen Anordnung aus Figur 1;
- Figur 3: ein Blockschaltbild einer weiteren bevorzugten Ausführungsform des erfindungsgemäßen Systems;
- Figur 4: ein Blockschaltbild einer bevorzugten Ausführungsform des erfindungsgemäßen Systems;
- Figur 5: ein Blockschaltbild einer weiteren bevorzugten Ausführungsform des erfindungsgemäßen Systems.

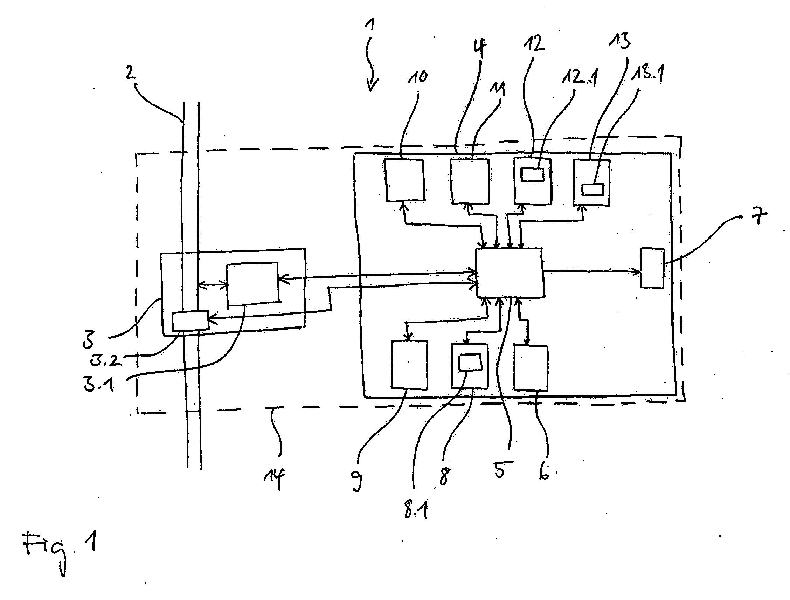

Figur 1 zeigt ein bevorzugtes Ausführungsbeispiel der erfindungsgemäßen Anordnung 1 zur Durchführung des erfindungsgemäßen Verfahrens. Die Anordnung 1 dient zum Erfassen und gesicherten Speichern eines ersten Verbrauchswertes des Verbrauchs eines ersten Verbrauchsgutes. Der erste Verbrauchswert stellt dabei den ersten Erfassungswert dar, während der Verbrauch des ersten Verbrauchsgutes die erste Erfassungsgröße repräsentiert. Im vorliegenden Beispiel handelt es sich dabei um den Stromverbrauch, der an einer Stromleitung 2 erfasst wird.

Die Anordnung 1 umfasst eine erste Erfassungseinrichtung 3 zur Erfassung des ersten Verbrauchswertes und eine mit der ersten Erfassungseinrichtung 3 verbundene Sicherheitseinrichtung in Form eines Sicherheitsmoduls 4. Die erste Erfassungseinrichtung 3 umfasst eine mit dem Sicherheitsmodul 4 verbundene Erfassungseinheit in Form einer Messeinrichtung 3.1, die in bekannter Weise zur im wesentlichen kontinuierlichen Messung des Stromverbrauchs ausgebildet ist.

Das Sicherheitsmodul 4 umfasst wiederum eine Verarbeitungseinheit 5, einen damit verbundenen ersten Speicher 6 sowie eine mit der Verarbeitungseinheit 5 verbundene erste Schnittstelleneinrichtung 7. Die von der Erfassungseinrichtung 3 erfassten Verbrauchswerte werden an die Verarbeitungseinheit 5 übermittelt, welche diesen dann im ersten Speicher 6 ablegt. Dabei werden im ersten Speicher mehrere nacheinander erfasste erste Verbrauchswerte gespeichert. Über die erste Schnittstelleneinrichtung 7 kann auf das Sicherheitsmodul, insbesondere auf den ersten Speicher zugegriffen werden, um insbesondere die ersten Verbrauchswerte aus dem ersten Speicher 6 auszulesen.

Das Sicherheitsmodul 4 ist zum vor unbefugtem Zugriff gesicherten Speichern des ersten Verbrauchswerts in dem ersten Speicher 6 ausgebildet. Hierzu weist es zum einen ein entsprechend physikalisch gesichertes Gehäuse auf, zum anderen erfolgt aber auch durch die Verarbeitungseinheit eine Überprüfung der Zugriffsberechtigung auf das Sicherheitsmodul 4. Die Überprüfung kann sich dabei auf einzelne, entsprechend sicherheitsrelevante Bereiche des Sicherheitsmoduls 4 beschränken. Im vorliegenden Beispiel erstreckt sie sich jedoch auch auf die Überprüfung der Zugriffsberechtigung für sämtliche Bereiche des Sicherheitsmoduls 4. Hierdurch wird ein erhöhter Schutz vor unerkannter unbefugter Manipulation der gespeicherten Verbrauchswerte erzielt.

Um eine weitere Absicherung der gespeicherten Verbrauchswerte zu erhalten, werden die ersten Verbrauchswerte in einer Weise gespeichert, dass nicht autorisierte Manipulationen an den gespeicherten Verbrauchswerten erkennbar sind. So kann der Verbrauchswert beispielsweise zusammen mit einer unter Verwendung des Verbrauchswerts erzeugten Authentifizierungsinformation, wie beispielsweise einem so genannten MAC (Message Authentification Code), einer digitalen Signatur oder dergleichen gespeichert werden, die in einem Bereich des Sicherheitsmoduls 4 erzeugt wird, für den die Zugriffsberechtigung überprüft wird. Hierdurch wird erreicht, dass eine unbefugte Manipulation der gespeicherten Verbrauchswerte zum einen entweder mangels Zugriff überhaupt nicht möglich ist oder bei einer Überprüfung zumindest nicht unerkannt bleibt.

Die Überprüfung der Zugriffsberechtigung durch die Verarbeitungseinheit 5 erfolgt unter Einsatz kryptographischer Mittel. Hierbei erfolgt im Rahmen einer gegenseitigen Authentifizierung der Kommunikationspartner eine Überprüfung digitaler Signaturen unter Verwendung entsprechender kryptographischer Zertifikate. Dies ist von besonderem Vorteil, da derartige kryptographische Verfahren einen besonders hohen Sicherheitsstandard gewährleisten.

Hierzu ist ein mit der Verarbeitungseinheit 5 verbundenes Kryptographiemodul 8 vorgesehen, welches dazu ausgebildet ist, der Verarbeitungseinheit 5 unter Verwendung wenigstens erster Kryptographiedaten kryptographische Mittel für wenigstens eine Sicherheitsanwendung zur Verfügung zu stellen. Die ersten Kryptographiedaten sind dabei in einem fünften Speicher 8.1 des Kryptographiemoduls 8 gespeichert. Die ersten Kryptographiedaten umfassen einen ersten kryptographischen Algorithmus, und einen oder mehrere kryptographischen Schlüssel sowie ein oder mehrere kryptographische Zertifikate entsprechender Zertifizierungsinstanzen sowie ein oder mehrere eigene kryptographische Zertifikate des Sicherheitsmoduls 4.

Das Kryptographiemodul 8 kann zum einen zur Verschlüsselung zu speichernder Daten verwendet werden als auch zur Verschlüsselung zu sendender Daten. Beispielsweise können die Daten, die über die erste Schnittstelle 7 ausgelesen bzw. übertragen werden, durch ein entsprechendes kryptographisches Verfahren mit dem gespeicherten kryptographischen Algorithmus verschlüsselt werden. Es versteht sich, dass je nach Anwendung, also beispielsweise je nachdem, ob Daten versandt oder gespeichert werden sollen, auch unterschiedliche kryptographische Verfahren angewendet werden können.

Das Sicherheitsmodul 4 ist zum Austausch wenigstens eines Teils der ersten Kryptographiedaten ausgebildet, um durch entsprechende Updates eine einfache und dauerhaft zuverlässige Sicherung der Daten zu gewährleisten. Hierbei ist es insbesondere möglich, dass neben den im fünften Speicher 8.1 abgelegten kryptographischen Schlüsseln und kryptographischen Zertifikaten auch der jeweils verwendete kryptographische Algorithmus ausgetauscht wird, um das System an geänderte Sicherheitsanforderungen anpassen zu können.

Die Implementierung und der Austausch der Kryptographiedaten erfolgt unter Nutzung der ersten Schnittstelleneinrichtung 7 im Rahmen einer so genannten Public Key Infrastructure (PKI). Weiterhin ist eine entsprechende Routine zur Überprüfung der Validität der verwendeten kryptographischen Zertifikate durch geeignete Überprüfungsroutinen vorgesehen.

Für die Anordnung 1 sind zwei unterschiedliche Zugriffsberechtigungsstufen vorgesehen, die mit unterschiedlichen Zugriffsrechten auf das Sicherheitsmodul 4 verknüpft sind, um eine hierarchische Struktur mit unterschiedlich weit gehenden Zugriffsrechten zu implementieren. So ist dem Benutzer der Anordnung 1, also dem Verbraucher, auf der untersten Zugriffsberechtigungsstufe als einzige Zugriffshandlung erlaubt, den gespeicherten Verbrauchswert über eine lokale Schnittstelle 9 aus dem ersten Speicher 6 auszulesen, während einem Administrator auf einer höheren Zugriffsberechtigungsstufe neben dem Auslesen des Verbrauchswerts aus dem ersten Speicher 6 die Modifikation weiterer Komponenten des Sicherheitsmoduls 4 möglich ist.

Die Verarbeitungseinheit 5 ist weiterhin zum Speichern des ersten Verbrauchswerts im ersten Speicher 6 verknüpft mit einer für den Erfassungszeitpunkt des ersten Verbrauchswerts charakteristischen Erfassungszeitkennung ausgebildet. Durch diese häufig auch als Zeitstempel bezeichnete Verknüpfung des gespeicherten ersten Verbrauchswerts mit dem Zeitpunkt seiner Erfassung wird die Weiterverarbeitung des Verbrauchswerts, beispielsweise zu Zwecken der Abrechnung aber auch zu Zwecken der Statistik etc. deutlich erleichtert.

Zur Ermittlung der Erfassungszeit umfasst das Sicherheitsmodul 4 ein mit der Verarbeitungseinheit 5 verbundenes Zeiterfassungsmodul 10. Hierbei handelt es sich um eine integrierte Echtzeituhr, die in regelmäßigen Abständen, beispielsweise beim Kontakt mit einer externen Datenzentrale, mit einer entsprechend genauen Zeitquelle synchronisiert wird.

Sowohl der gespeicherte erste Verbrauchswert als auch die Erfassungszeitkennung werden durch die Verarbeitungseinheit 5 unter Zugriff auf das Kryptographiemodul 8 abgesichert. Dies erfolgt dadurch, dass eine digitale Signatur über dem Verbrauchswert und der zugehörigen Erfassungszeitkennung erstellt wird. Hierdurch wird sichergestellt, dass unberechtigte Manipulationen an den so abgesicherten Daten bei einer späteren Überprüfung festgestellt werden können.

Die Verarbeitungseinheit 5 weist einen ersten Betriebsmodus und einen zweiten Betriebsmodus auf, zwischen denen, veranlasst durch einen Umschaltbefehl, umgeschaltet werden kann. Die Verarbeitungseinheit 5 ist dabei zur Überprüfung eines Umschaltkriteriums und zur Erzeugung des Umschaltbefehls in Abhängigkeit vom Ergebnis der Überprüfung des Umschaltkriteriums ausgebildet. Das Umschaltkriterium ist in einem mit der Verarbeitungseinheit verbundenen zweiten Speicher 11 gespeichert.

Hiermit lassen sich in einfacher Weise Anwendungsszenarien realisieren, bei denen die Anordnung in Abhängigkeit vom Eintreten vorgegebener oder vorgebbarer Bedingungen unterschiedliche Funktionen ausführt. So kann beispielsweise bei Eintreten entsprechender vorgegebener oder vorgebbarer Bedingungen eine Benachrichtigungsroutine initiiert werden, mit welcher der Verbraucher des Verbrauchsgutes, der Anbieter des Verbrauchsgutes oder ein Dritter vom Eintreten der Bedingung in Kenntnis gesetzt wird. Dies kann über beliebige Benachrichtigungsmittel, wie optische oder akustische Anzeigen, E-Mail, Fax, SMS etc. erfolgen. So kann der Verbraucher beispielsweise über einen ungewöhnlich hohen oder vom üblichen Verbrauchsprofil abweichenden Verbrauch oder das Überschreiten eines von ihm selbst gesetzten Verbrauchlimits informiert werden.

Im vorliegenden Beispiel ist eine mit der Verarbeitungseinheit verbundene, wenigstens in dem zweiten Betriebsmodus von der Verarbeitungseinheit angesteuerte Verbrauchsbeeinflussungseinrichtung in Form eines Schalters 3.2 zur Beeinflussung des Verbrauchs des ersten Verbrauchsgutes durch Sperren des Verbrauchs vorgesehen. Durch diesen Schalter 3.2 kann beim Eintreten bestimmter Bedingungen, beispielsweise dem Unterschreiten eines bestimmten Guthabens, dem Überschreiten eines bestimmten Kreditrahmens oder dem Überschreiten eines bestimmten Verbrauchswerts, das Sperren des Verbrauchs erfolgen. Dabei ist vorgesehen, dass rechtzeitig vor Eintreten dieser Bedingung eine der oben beschriebenen Benachrichtigungsroutinen eingeleitet wird, um den Verbraucher über die drohende Sperrung zu informieren.

Das Umschaltkriterium ist durch Zugriff über die erste Schnittstelleneinrichtung 7 auf den zweiten Speicher 11 vorgebbar und veränderbar, um das Umschaltkriterium beeinflussen zu können bzw. auf geänderte Umstände reagieren zu können.

Das Sicherheitsmodul 4 umfasst weiterhin ein mit der Verarbeitungseinheit 5 verbundenes Quittungsmodul 12 mit einem dritten Speicher 12.1. Die Verarbeitungseinheit 5 erstellt unter Zugriff auf das Quittungsmodul 12 eine erste Quittung für jeden Zugriff auf das Sicherheitsmodul 4. Insbesondere wird eine Quittung für jeden Zugriff auf den ersten Speicher 6 erstellt. Die Verarbeitungseinheit 5 speichert die erste Quittung dann in dem dritten Speicher 12.1. Hierdurch wird der Zugriff auf das Sicherheitsmodul 4 dokumentiert und kann gegebenenfalls zu einem späteren Zeitpunkt ausgewertet werden.

Auch hier erfolgt wieder ein vor unbefugtem Zugriff gesichertes Speichern der Quittung sowie die Absicherung der Quittung durch kryptographische Mittel, wie sie bereits oben ausführlich beschrieben wurden, sodass an dieser Stelle nur auf die obigen Ausführungen verwiesen werden soll.

Die Verarbeitungseinheit speichert die Quittung im zweiten Speicher 12.1 verknüpft mit einer für den Zugreifer charakteristischen Zugreiferkennung. Bei dieser Zugreiferkennung handelt es sich um eine zweite digitale Signatur des Zugreifers, die über der Quittungsinformation erzeugt wird. Hiermit können die im Rahmen solcher Zugriffe vorgenommenen Modifikationen der Anordnung 1, insbesondere des Sicherheitsmoduls 4 einzelnen Zugreifern zugeordnet werden.

Die Quittung wird zudem mit einem Zeitstempel versehen und gespeichert. Hierzu greift die Verarbeitungseinheit auf das Zeiterfassungsmodul 10 zu und erstellt eine für den Zugriffzeitpunkt charakteristische Zugriffszeitkennung, die mit der Quittung verknüpft wird. Auch hier werden wieder dieselben Maßnahmen, insbesondere dieselben Sicherungsmaßnahmen ergriffen, wie sie bereits oben im Zusammenhang mit der Erfassungszeitkennung beschrieben wurden. So wird die Zugriffszeitkennung in die zweite digitale Signatur mit einbezogen.

Das Sicherheitsmodul 4 weist zur Auswahl eines Anbieters des ersten Verbrauchsgutes ein mit der Verarbeitungseinheit 5 verbundenes Auswahlmodul 13 auf. Die Verarbeitungseinheit 5 speichert den ersten Verbrauchswert im ersten Speicher 6 in diesem Fall verknüpft mit einer für den ausgewählten Anbieter des ersten Verbrauchsgutes charakteristischen Anbieterkennung. Hierdurch ist es möglich, nach bestimmten Kriterien einen bestimmten Anbieter auszuwählen und diesem Anbieter die ermittelten Verbrauchswerte zuzuordnen, um sie beispielsweise später gegenüber diesem Anbieter abzurechnen.

Der Verbraucher kann über die zweite Schnittstelle 9 nach Belieben einen bestimmten Stromlieferanten auswählen, dem die nach der Auswahl erfassten Verbrauchswerte in der beschriebenen Weise zugeordnet werden. Auch hier ist wieder vorgesehen, dass die Verarbeitungseinheit 5 die Anbieterkennung dadurch absichert, dass sie diese in die erste digitale Signatur über den jeweiligen Verbrauchswert einbezieht. Alternativ kann eine gesonderte vierte digitale Signatur über der Anbieterkennung erfolgen.

Die Verarbeitungseinheit 5 überprüft zur Auswahl ein Auswahlkriterium und wählt einen Anbieter in Abhängigkeit vom Ergebnis dieser Überprüfung aus, wobei das Auswahlkriterium in einem mit der Verarbeitungseinheit 5 verbundenen vierten Speicher 13.1 des Auswahlmoduls 13 gespeichert ist. Dieses Auswahlkriterium kann, wie oben erwähnt, durch den Verbraucher durch Auswahl eines Anbieters vorgegeben werden. Alternativ kann der Verbraucher auch einen Modus wählen, mit dem die Verbrauchskosten minimiert werden. Hierbei wird durch Vergleich von im vierten Speicher 13.1 gespeicherten Gebührentabellen unterschiedlicher Anbieter derjenige Anbieter ausgewählt, der das Verbrauchsgut zum aktuellen Zeitpunkt zum günstigsten Preis anbietet. Diese Abfrage kann in vorgegebenen Intervallen erfolgen. Zudem kann eine regelmäßig von der Verarbeitungseinheit 5 initiierte Aktualisierung der Gebührentabellen ebenso vorgesehen sein wie regelmäßige Updates seitens der Anbieter, die über eine entsprechende Kommunikationsverbindung zur Verarbeitungseinheit 5 gelangen.

Um die Auswahl durch den Verbraucher auch zu einem späteren Zeitpunkt noch nachvollziehen zu können, ist vorgesehen, dass die Verarbeitungseinheit 5 den ersten Verbrauchswert im ersten Speicher 6 verknüpft mit einer für den auswählenden Benutzer charakteristischen Benutzerkennung ablegt. Auch hier können wieder die oben beschriebenen Absicherungsmechanismen verwendet werden. Auch hier ist wieder vorgesehen, dass die Verarbeitungseinheit 5 die Benutzerkennung dadurch absichert, dass sie diese in die erste digitale Signatur über den jeweiligen Verbrauchswert einbezieht. Alternativ kann eine gesonderte fünfte digitale Signatur über der Benutzerkennung erfolgen.

Die erste Erfassungseinrichtung 3 und das Sicherheitsmodul 4 sind in einer vor unbefugtem Zugriff geschützten sicheren Umgebung 14 angeordnet, um den unbefugten Zugriff nicht nur auf die Daten des Sicherheitsmoduls 4 sondern auch auf die Daten, die von und zu der ersten Erfassungseinrichtung 3 geliefert werden, wirksam zu unterbinden.

Die sichere Umgebung 14 wird zum einen physisch durch sichere Gehäuse der ersten Erfassungseinrichtung 3 und des Sicherheitsmoduls 4 hergestellt, die mit hinlänglich bekannten Mittel zur Erfassung von Manipulationen am Gehäuse ausgestattet sind. Zum anderen wird sie logisch durch ein entsprechend abgesichertes Kommunikationsprotokoll zwischen der ersten Erfassungseinrichtung 3 und dem Sicherheitsmodul 4 hergestellt. So wird bei jeder Kommunikation zwischen der ersten Erfassungseinrichtung 3 und dem Sicherheitsmodul 4 über eine entsprechend starke gegenseitige Authentifizierung ein gesicherter Kommunikationskanal aufgebaut. Es versteht sich, dass die erste Erfassungseinrichtung 3 hierzu über entsprechende Kommunikationsmittel verfügt, welche die beschriebenen Sicherheitsfunktionalitäten zur Verfügung stellen.

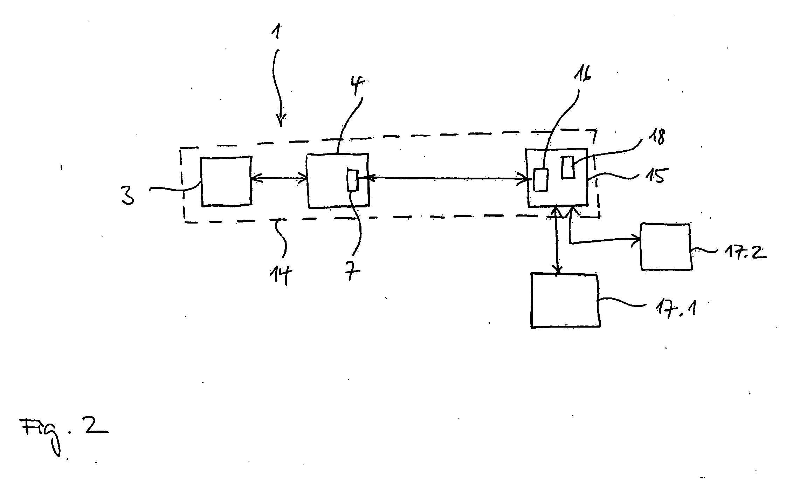

Figur 2 zeigt ein Blockschaltbild einer bevorzugten Ausführungsform des erfindungsgemäßen Systems mit der erfindungsgemäßen Anordnung 1 aus Figur 1 und einer entfernten Datenzentrale 15.

Die erste Schnittstelleneinrichtung 7 des Sicherheitsmoduls 4 ist als erste Kommunikationseinrichtung ausgebildet. Weiterhin weist die Datenzentrale 15 eine zweite Kommunikationseinrichtung 16 auf. Über die erste Kommunikationseinrichtung 7 und die zweite Kommunikationseinrichtung 16 kann eine erste Kommunikationsverbindung zwischen dem Sicherheitsmodul 4 und der Datenzentrale 15 hergestellt werden. Hierdurch ist es möglich, aus der entfernten Datenzentrale auf die Anordnung 1, insbesondere das Sicherheitsmodul 4, zuzugreifen, die gespeicherten ersten Verbrauchswerte auszulesen und in der Datenzentrale 15 weiter zu verarbeiten. Ebenso ist es bei entsprechender Zugriffsberechtigung natürlich möglich, über die Datenzentrale 15 das Verhalten der Anordnung 1 zu beeinflussen, wie es oben bereits beschrieben wurde.

Die sichere Umgebung 14 ist im gezeigten Beispiel durch ein entsprechend abgesichertes Kommunikationsprotokoll zwischen der ersten Kommunikationseinrichtung 7 und der zweiten Kommunikationseinrichtung 16 auf die Datenzentrale 15 ausgedehnt. Ein solches Kommunikationsprotokoll wurde oben bereits im Zusammenhang mit der Kommunikation zwischen dem Sicherheitsmodul 4 und der Erfassungseinrichtung 3 beschrieben, sodass hier nur auf die obigen Ausführungen verwiesen werden soll.

Die Datenzentrale 15 speichert die ausgelesenen Verbrauchsdaten und hält sie so für die weitere Verarbeitung bereit. Die Verarbeitung kann in einer weiteren entfernten Datenzentrale, beispielsweise des Anbieters des entsprechenden Verbrauchsgutes erfolgen, an welche die Verbrauchsdaten dann weitergegeben werden. Im gezeigten Beispiel verarbeitet die Datenzentrale 15 diese ausgelesenen Verbrauchsdaten selbst.

Hierbei erfolgt über die Datenzentrale 15 die Verbrauchsabrechnung. Die Datenzentrale 15 erstellt in Abhängigkeit von den Speicherinhalten des ersten Speichers eine Abrechnungsinformation, die dem Verbraucher auf üblichem Wege mitgeteilt wird. Im Falle von Verbrauchern, die an einem Abbuchungsverfahren teilnehmen, ist die Datenzentrale 15 direkt mit den betreffenden Banken 17.1 und 17.2 der betreffenden Verbraucher verbunden.

Die Datenzentrale 15 kann von dem Stromanbieter betrieben werden. Es versteht sich jedoch, dass die Datenzentrale 15 auch von einem Dritten betrieben werden kann, der diese Abrechnungsdienste dem Stromanbieter zur Verfügung stellt.

Wie bereits erwähnt, ist bei entsprechender Zugriffsberechtigung vorgesehen, dass über die Datenzentrale 15 das Verhalten der Anordnung 1 beeinflusst wird. Die Datenzentrale gibt in diesem Fall das oben beschriebene Umschaltkriterium vor oder verändert dieses.

Dabei ist unter anderem vorgesehen, dass bei Eintreten bestimmter Bedingungen der Stromverbrauch durch die Datenzentrale 15 unterbunden wird. Bei Einsatz des Systems in einem so genannten Vorauszahlungssystem oder Prepaid-System kann dies der Fall sein, wenn ein bestimmtes Minimalguthaben unterschritten wird. Hierzu kann in Verbindung mit der Anordnung 1 der Stromverbrauch durch den Schalter 3.2 gesperrt werden.

Das Umschaltkriterium ist dann das Feststellen des Unterschreitens einer in der Datenzentrale 15 gespeicherten Guthabengrenze durch das aktuelle im zweiten Speicher 12.1 gespeicherte Guthaben. Sobald das Eintreten dieser Bedingung in der Datenzentraie 15 erfasst wird, sendet diese einen entsprechenden Umschaltbefehl an das Sicherheitsmodul 4.

Wie bereits oben im Zusammenhang mit der Anordnung 1 beschrieben kann auch hier eine entsprechende Vorwarnroutine implementiert sein, welche den Verbraucher rechtzeitig vor der Sperrung warnt. Dem Verbraucher ist zudem eine Möglichkeit zur einfachen und schnellen Abwendung oder Aufhebung der Sperrung gegeben. Die Datenzentrale weist hierzu eine dritte Kommunikationseinrichtung 18 auf, über die eine zweite Kommunikationsverbindung zum Verändern des aktuellen im zweiten Speicher 12.1 gespeicherten Guthabens herstellbar ist. So kann beispielsweise eine Expresszahlung per Handy durch entsprechende Dienste oder Ähnliches vorgesehen sein.

In der Datenzentrale 15 werden neben den Verbrauchswerten unter anderem auch sämtliche anderen, im Sicherheitsmodul 4 erzeugten Daten gespeichert und verarbeitet. Insbesondere werden für spätere Nachweise der Auswahl eines Anbieters die Auswahlkennungen und mit der Auswahl verknüpften Benutzerkennungen gespeichert und gegebenenfalls weiterverarbeitet.

Im Falle eines dauerhaften Ausfalls der Kommunikationsverbindung zwischen einer der Datenzentralen 15, 19 und dem Sicherheitsmodul 4 können die im ersten Speicher gespeicherten Daten auch lokal ausgelesen werden. Hierzu kann ein Lesegerät 26 über eine entsprechende Schnittstelle an das Sicherheitsmodul 4 angeschlossen werden. Auch hier erfolgt natürlich wieder eine entsprechende Prüfung der Zugriffsberechtigung.

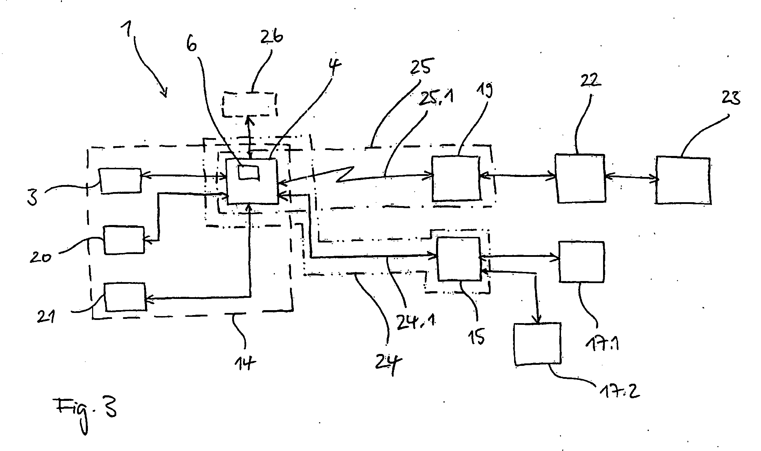

Figur 3 zeigt ein Blockschaltbild einer weiteren bevorzugten Ausführungsform des erfindungsgemäßen Systems mit der erfindungsgemäßen Anordnung 1, deren Sicherheitsmodul 4 mit zwei entfernten Datenzentralen 15 und 19 verbunden ist.

Die Anordnung 1 wurde dabei lediglich um eine mit dem Sicherheitsmodul 4 verbundene zweite Erfassungseinrichtung 20 und eine ebenfalls mit dem Sicherheitsmodul 4 verbundene dritte Erfassungseinrichtung 21 erweitert, die beide in der sicheren Umgebung 14 angeordnet sind. Die erste Erfassungseinrichtung 3 und die zweite Erfassungseinrichtung 20 erfassen den Stromverbrauch in getrennten Wohneinheiten eines Hauses, während die dritte Erfassungseinrichtung 21 zentral den Gasverbrauch einer Zentralheizung des Hauses erfasst.

Die erfassten Verbrauchswerte werden im ersten Speicher 6 des Sicherheitsmoduls 4 gespeichert. Dabei wird mit den Verbrauchswerten unter anderem eine Erfassungseinrichtungskennung für die jeweilige Erfassungseinrichtung, d. h. den jeweiligen Verbraucher, und eine Verbrauchsgutkennung für das jeweilige Verbrauchsgut verknüpft. Diese Daten werden zudem in der oben bereits beschriebenen Weise durch Einbeziehung in eine erste digitale Signatur über diese Daten kryptographisch abgesichert.

Die Stromverbrauchswerte der beiden Wohneinheiten werden an die erste Datenzentrale 15 übersandt und dort in der oben beschriebenen Weise weiterverarbeitet und abgerechnet. Die Gasverbrauchswerte werden an die zweite Datenzentrale 19 gesandt, dort aufbereitet und an eine dritte Datenzentrale 22 des Gasanbieters versandt, der den Verbrauch dann abrechnet, wobei die dritte Datenzentrale 22 gegebenenfalls direkt mit einer Bank 23 des Verbrauchers verbunden ist.

Das Sicherheitsmodul 4 und die erste Datenzentrale 15 befinden sich in einer sicheren Umgebung 24, die unter anderem durch eine entsprechend sicheres Kommunikationsprotokoll zwischen dem Sicherheitsmodul 4 und der ersten Datenzentrale 15 hergestellt ist. Die Kommunikation erfolgt hierbei über eine Standleitung 24.1.

Das Sicherheitsmodul 4 und die zweite Datenzentrale 19 befinden sich ebenfalls in einer sicheren Umgebung 25, die auch hier unter anderem durch eine entsprechend sicheres Kommunikationsprotokoll zwischen dem Sicherheitsmodul 4 und der zweiten Datenzentrale 19 hergestellt ist. Die Kommunikation erfolgt in diesem Fall über eine Funkverbindung 25.1.

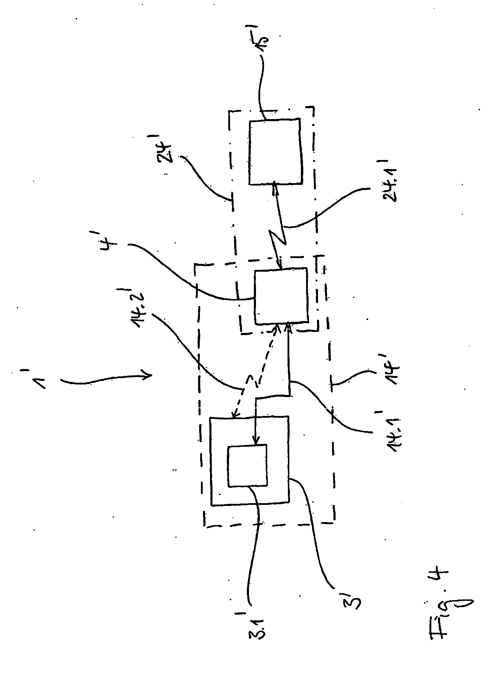

Figur 4 zeigt ein Blockschaltbild einer weiteren bevorzugten Ausführungsform des erfindungsgemäßen Systems mit einer erfindungsgemäßen Anordnung 1', deren Sicherheitsmodul 4' mit einer entfernten Datenzentrale 15' verbunden ist. Der grundsätzliche Aufbau und die Funktionsweise des Systems entsprechen demjenigen aus Figur 2, sodass hier lediglich auf die Unterschiede eingegangen werden soll.

Ein Unterschied besteht darin, dass es sich bei dem zu erfassenden Verbrauchswert um eine Ortsinformation handelt. Die Messeinrichtung der mobilen Erfassungseinrichtung 3' ist daher ein GPS-Modul 3.1', welches zugleich die Funktion eines Zeiterfassungsmoduls erfüllt und mit einer Erfassungszeit gekoppelte Positionsdaten an das Sicherheitsmodul 4 liefert. Das Sicherheitsmodul 4' verarbeitet diese Daten in der oben beschriebenen Weise und liefert sie an die Datenzentrale 15', welche die Abrechnung erstellt.

Die Erfassungseinrichtung 3' und das Sicherheitsmodul 4' sind dank eines entsprechend abgesichertes Kommunikationsprotokolls in einer sicheren Umgebung 14' angeordnet. Gleiches gilt für das Sicherheitsmodul 4' und die Datenzentrale 15', die in einer sicheren Umgebung 24' angeordnet sind.

Im gezeigten Beispiel ist auch das Sicherheitsmodul 4' mobil gestaltet, weshalb eine feste Datenleitung 14.1' zwischen dem Sicherheitsmodul 4' und dem GPS-Modul 3.1' vorgesehen ist, während die Kommunikation zwischen dem Sicherheitsmodul 4' und der Datenzentrale 15' über eine Funkverbindung 24.1' abgewickelt wird. Es versteht sich jedoch, dass bei anderen Varianten der Erfindung auch ein stationäres Sicherheitsmodul vorgesehen sein kann, das dann über eine entsprechende Funkverbindung mit der mobilen Erfassungseinrichtung kommuniziert, wie in der Figur 4 durch den gestrichelten Pfeil 14.2' angedeutet ist.

Mit einer solchen Einrichtung können beispielsweise die gefahrenen Kilometer eines Mietwagens oder dergleichen abgerechnet werden. Ebenso können hiermit Mautgebühren für mautpflichtige Straßen etc. abgerechnet werden.

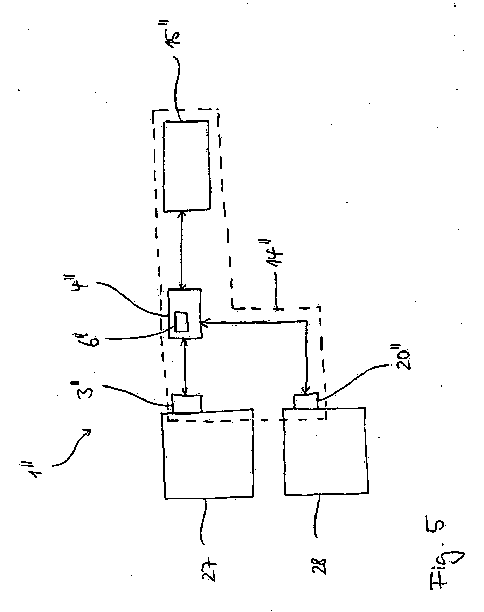

Figur 5 zeigt ein Blockschaltbild einer weiteren bevorzugten Ausführungsform des erfindungsgemäßen Systems mit einer erfindungsgemäßen Anordnung 1" und einer entfernten Datenzentrale 15". Des System wird dabei im Rahmen der Qualitätssicherung in einem Supermarkt eingesetzt.

Die Anordnung 1" umfasst ein Sicherheitsmodul 4", das mit einer ersten Erfassungseinrichtung 3" und einer zweiten Erfassungseinrichtung 20" verbunden ist. Die erste Erfassungseinrichtung 3" erfasst als erste Erfassungsgröße einen ersten Betriebsparameter einer ersten Betriebseinrichtung in Form einer Gefriertruhe 27 im Verkaufsraum des Supermarkts. Bei dem ersten Betriebparameter handelt es sich um die Temperatur innerhalb der Gefriertruhe 27. Die zweite Erfassungseinrichtung 20" erfasst als zweite Erfassungsgröße einen zweiten Betriebsparameter einer zweiten Betriebseinrichtung in Form eines Kühlregals 28 im Verkaufsraum des Supermarkts. Bei dem ersten Betriebparameter handelt es sich um die Temperatur innerhalb des Kühlregals 28.

Das Sicherheitsmodul 4", die erste Erfassungseinrichtung 3", die zweite Erfassungseinrichtung 20" und die Datenzentrale 15" sind wiederum in einer sicheren Umgebung 14" angeordnet, die neben entsprechend sicheren Gehäusen der einzelnen Komponenten durch ein entsprechendes sicheres Kommunikationsprotokoll zwischen den einzelnen Komponenten realisiert ist.

Die erfassten ersten und zweiten Betriebsparameter werden im ersten Speicher 6" des Sicherheitsmoduls 4" gespeichert. Dabei wird mit den Betriebsparametern unter anderem eine Erfassungseinrichtungskennung für die jeweilige Erfassungseinrichtung, d. h. die jeweilige Betriebseinrichtung, und eine Erfassungsgrößenkennung für die jeweilige Erfassungsgröße, also den Betriebsparameter, verknüpft. Diese Daten werden zudem in der oben bereits beschriebenen Weise durch Einbeziehung in eine erste digitale Signatur über diese Daten kryptographisch abgesichert.

Die Erfassungswerte der beiden Betriebseinrichtungen werden an die Datenzentrale 15" übersandt und dort gespeichert bzw. weiterverarbeitet. Sie können beispielsweise später dazu verwendet werden, nachzuweisen, dass die Temperatur innerhalb der Gefriertruhe 27 bzw. des Kühlregals 28 stets unterhalb der gesetzlich vorgeschriebenen Temperaturen lagen.

Der Sicherheitsmodul 4" überprüft weiterhin ständig, ob die erfassten Temperaturwerte unterhalb vorgegebener Grenzwerte liegen. Rechtzeitig vor Überschreiten entsprechender Grenzwerte wird eine entsprechende Benachrichtigungsroutine initiiert, die beispielsweise das Personal des Supermarkts vor der Überschreitung der Grenzwerte warnt. Weiterhin ist vorgesehen, dass in diesem Fall über eine entsprechende Beeinflussungseinrichtung der jeweiligen Erfassungseinrichtung Einfluss auf den Betriebsparameter genommen wird, indem beispielsweise durch eine entsprechende Verbindung mit dem Kühlaggregat der Gefriertruhe 27 bzw. des Kühlregals 28 eine Erhöhung der Kühlleistung initiiert wird.

## Patentansprüche

1. Anordnung zum Erfassen und gesicherten Speichern wenigstens eines ersten Erfassungswertes wenigstens einer ersten Erfassungsgröße mit
- wenigstens einer ersten Erfassungseinrichtung (3; 3'; 3") zur Erfassung des ersten Erfassungswertes und
- einer mit der ersten Erfassungseinrichtung (3; 3'; 3") verbundenen Sicherheitseinrichtung (4; 4'; 4"), die eine Verarbeitungseinheit (5), einen damit verbundenen ersten Speicher (6; 6") sowie eine mit der Verarbeitungseinheit (5) verbundene erste Schnittstelleneinrichtung (7) umfasst, wobei
- die Sicherheitseinrichtung (4; 4'; 4") zum vor unbefugtem Zugriff gesicherten Speichern des ersten Erfassungswerts in dem ersten Speicher (6; 6") ausgebildet Ist,
- die erste Schnittstelleneinrichtung (7) zum Zugreifen auf die Sicherheitseinrichtung (4; 4'; 4") ausgebildet ist.
- die erste Erfassungseinrichtung (3; 3'; 3") eine mit der Sicherheitseinrichtung (4; 4'; 4") verbundene Erfassungseinheit (3.1; 3.1') umfasst, die zur kontinuierlichen Erfassung der ersten Erfassungsgröße ausgebildet ist, und
- die Verarbeitungseinheit (5) zur Überprüfung der Zugriffsberechtigung auf die Sicherheitseinrichtung (4; 4'; 4") ausgebildet ist
**dadurch gekennzeichnet, dass**.
- die erste Erfassungseinrichtung (3; 3'; 3") eine Verbrauchsmesseinrichtung Ist, die erste Erfassungsgröße der Verbrauch eines ersten Verbrauchsgutes in Form eines ersten Energieträgers ist sowie der erste Erfassungswert ein erster Verbrauchswert des ersten Energieträgers ist und
- die Sicherheitseinrichtung (4) ein mit der Vorarbeftungseinheit (5) verbundenes Auswahlmodul (13) aufweist, welches dazu ausgebildet ist, ein Auswahlkriterium zu überprüften und in Abhängigkeit vom Ergebnis der Überprüfung des Auswahlkriteriums einen Anbieter des ersten Verbrauchsgutes aus einer Anzahl von Anbietern auszuwählen, und
- die Verarbeitungseinheit (5) zum Speichern des ersten Verbrauchswerts im ersten Speicher (6) verknüpft mit einer für den ausgewählten Anbieter des ersten Verbrauchsgutes charakteristischen Anbieterkennung ausgebildet ist.

2. Anordnung nach Anspruch 1, **dadurch gekennzeichnet, dass** die Verarbeitungseinheit (5) zur Überprüfung der Zugriffsberechtigung unter Einsatz kryptographischer Mittel ausgebildet ist.

3. Anordnung nach Anspruch 1 oder 2, **dadurch gekennzeichnet, dass** die Verarbeitungseinheit (5) zum Speichern des ersten Erfassungswerts im ersten Speicher (6; 6") verknüpft mit einer für den Erfassungszeitpunkt des ersten Erfassungswerts charakteristischen Erfassungszeitkennung ausgebildet ist.

4. Anordnung nach einem der vorhergehenden Ansprüche, **dadurch gekennzeichnet, dass**
- wenigstens eine von der ersten Erfassungseinrichtung (3; 3'; 3") verschiedene zweiten zweite Erfassungseinrichtung (20; 20") in Form einer Verbrauchsmesseinrichtung zur Erfassung wenigstens eines von dem ersten Erfassungswert verschiedenen zweiten Erfassungswerts der ersten Erfassungsgröße vorgesehen ist und
- die Sicherheitseinrichtung (4; 4") zum vor unbefugtem Zugriff gesicherten Speichern des zweiten Erfassungswerts in dem ersten Speicher (6; 6") ausgebildet ist.

5. Anordnung nach einem der vorhergehenden Ansprüche, **dadurch gekennzeichnet, dass**
- entweder die erste Erfassungseinrichtung zur Erfassung wenigstens eines Erfassungswerts einer zweiten Erfassungsgröße ausgebildet ist
- oder wenigstens eine dritte Erfassungseinrichtung (21) in Form einer Verbrauchsmesseinrichtung zur Erfassung wenigstens eines Erfassungswerts einer zweiten Erfassungsgröße vorgesehen ist, wobei
- die zweite Erfassungsgröße der Verbrauch eines zweiten Verbrauchsgutes in Form eines von dem ersten Energieträger verschiedenen zweiten Energieträgers ist sowie der Erfassungswert der zweiten Erfassungsgröße ein Verbrauchswert des zweiten Energieträgers ist,
- und die Sicherheitseinrichtung (4) zum vor unbefugtem Zugriff gesicherten Speichern des Erfassungswerts der zweiten Erfassungsgröße in dem ersten Speicher (6) ausgebildet ist.

6. Anordnung nach einem der vorhergehenden Ansprüche, **dadurch gekennzeichnet, dass** die Verarbeitungseinheit (5) wenigstens einen ersten Betriebsmodus sowie einen zweiten Betriebsmodus aufweist und zum Umschalten zwischen dem ersten und zweiten Betriebsmodus veranlasst durch einen Umschaltbefehl ausgebildet ist.

7. Anordnung nach Anspruch 6, **dadurch gekennzeichnet, dass** eine mit der Verarbeitungseinheit (5) verbundene, wenigstens in dem zweiten Betriebsmodus von der Verarbeitungseinheit (5) angesteuerte Beeinflussungseinrichtung (3.2) zur Beeinflussung der ersten Erfassungsgröße vorgesehen ist.

8. Anordnung nach einem der vorhergehenden Ansprüche, **dadurch gekennzeichnet, dass** die Sicherheitseinrichtung (4) ein mit der Verarbeitungseinheit verbundenes Quittungsmodul (12) mit einem Speicher (12.1) umfasst und die Verarbeitungseinheit (5) zur Erstellung einer Quittung für einen Zugriff auf die Sicherheitseinrichtung (4) und zum Speichern der ersten Quittung in dem Speicher (12.1) des Quittungsmoduls (12) ausgebildet ist.

9. Anordnung nach Anspruch 8, **dadurch gekennzeichnet, dass** die Verarbeitungseinheit (5)
- zum Speichern der Quittung in dem Speicher (12.1) des Quittungsmoduls (12) verknüpft mit einer für den Zugreifer charakteristischen Zugreiferkennung ausgebildet ist.
und/oder
- zum Speichern der Quittung in dem Speicher (12.1) des Quittungsmoduls (12) verknüpft mit einer für den Zugriffszeitpunkt charakteristischen Zugriffszeitkennung ausgebildet ist.

10. Anordnung nach Anspruch 8 oder 9, **dadurch gekennzeichnet, dass** die Verarbeitungseinheit (5) zum Absichern der gespeicherten Quittung und/oder der Zugreiferkennung und/oder der Zugriffszeitkennung durch kryptographische Mittel ausgebildet ist.

11. Anordnung nach einem der vorhergehenden Ansprüche, **dadurch gekennzeichnet, dass** die Verarbeitungseinheit (5) zum Absichern der Anbieterkennung durch kryptographische Mittel ausgebildet ist.

12. Anordnung nach Anspruch 11, **dadurch gekennzeichnet, dass** die Verarbeitungseinheit (5) zum Speichern des ersten Verbrauchswerts im ersten Speicher (6) verknüpft mit einer für den auswählenden Benutzer charakteristischen Benutzerkennung ausgebildet ist.

13. Anordnung nach einem der vorhergehenden Ansprüche, **dadurch gekennzeichnet, dass** die Sicherheitseinrichtung (4; 4'; 4") ein mit der Verarbeitungseinheit (5) verbundenes Kryptographiemodul (8) umfasst, welches dazu ausgebildet ist, der Verarbeitungseinheit unter Verwendung wenigstens erster Kryptographiedaten kryptographische Mittel für wenigstens eine Sicherheitsanwendung zur Vertügung zu stellen, wobei die ersten Kryptographiedaten in einem Speicher (8.1) des Kryptographiemoduls (8) gespeichert sind und einen ersten kryptographischen Algorithmus umfassen.

14. Anordnung nach einem der vorhergehenden Ansprüche, **dadurch gekennzeichnet, dass** die erste Erfassungseinrichtung (3; 3'; 3") und die Sicherheitseinrichtung (4; 4'; 4") in einer vor unbefugtem Zugriff geschoren sicheren Umgebung (14; 14'; 14") angeordnet sind.

15. Anordnung (1; 1'; 1") nach einem der vorhergehenden Ansprüche, **dadurch gekennzeichnet, dass** die Sicherheitseinrichtung (4; 4'; 4") wenigstens eine mit der Verarbehungseinheit (5) verbundene erste Schnittstelleneinrichtung (7) zum Zugreifen auf die Sicherheitseinrichtung (4; 4'; 4") aufweist, die als erste Kommunikationseinrichtung ausgebildet ist, und dass eine von der Sicherheitseinrichtung (4; 4'; 4") entfernte Datenzentrale (15, 19; 15'; 15") mit einer zweiten Kommunikationseinrichtung (16) vorgesehen ist, wobei die erste Kommunikationseinrichtung (7) und die zweite Kommunikationseinrichtung (18) zum Herstellen einer ersten Kommunikationsverbindung zwischen der Sicherheitseinrichtung (4; 4'; 4") und der Datenzentrale (15, 19; 15'; 15") ausgebildet sind.

16. Anordnung nach Anspruch 15, **dadurch gekennzeichnet, dass** die Datenzentrale (15, 19; 15'; 15")
- zum Auslesen der Speicherinhalte des ersten Speichers (6; 6") über die erste Kommunikationsverbindung ausgebildet ist und/oder
- zur Erstellung einer Abrechnungsinformation in Abhängigkeit von den Speicherinhalten des ersten Speichers (6; 6") ausgebildet ist und/oder
- zur Beeinflussung des Betriebsmodus der Verarbeitungseinheit (5) ausgebildet ist.

17. Verfahren zum Erfassen und gesicherten Speichern wenigstens eines ersten Erfassungswertes wenigstens einer ersten Erfassungsgröße, bei dem
- die erste Erfassungsgröße kontinuierlich erfasst wird und der erste Erfassungswert in einer Sicherheitseinrichtung (4; 4'; 4") gespeichert wird, wobei
- der erste Erfassungswert in einem ersten Speicher (6; 6") der Sicherheitseinrichtung (4; 4'; 4") vor unbefugtem Zugriff gesichert gespeichert wird und
- bei einem Zugriff auf die Sicherheitseinrichtung (4; 4'; 4") über eine erste Schnittstelleneinrichtung (7) eine Überprüfung der Zugriffsberechtigung auf die Sicherheitseinrichtung (4; 4'; 4") erfolgt,
**dadurch gekennzeichnet, dass**
- die erste Erfassungsgröße der Verbrauch eines ersten Verbrauchsgutes in Form eines ersten Energieträgers ist sowie der erste Erfassungswert ein erster Verbrauchswert des ersten Energieträgers ist,
- ein Auswahikriterium überprüft wird und in Abhängigkeit vom Ergebnis der Überprüfung des Auswahlkriteriums ein Anbieter des ersten Verbrauchsgutes aus einer Anzahl von Anbietem ausgewählt wird und
- der erste Verbrauchswert verknüpft mit einer für den ausgewählten Anbieter des ersten Verbrauchsgutes charakteristischen Anbieterkennung im ersten Speicher (6) gespeichert wird.

18. Verfahren nach Anspruch 17, **dadurch gekennzeichnet, dass** die Überprüfung der Zugriffsberechtigung unter Einsatz kryptographlscher Mittel erfolgt.

19. Verfahren nach Anspruch 17 oder 18, **dadurch gekennzeichnet, dass** der erste Erfassungswert verknüpft mit einer für den Erfassungszeitpunkt des ersten Ertassungswerts charakteristischen Erfassungszeitkennung im ersten Speicher (6; 6") gespeichert wird.

20. Verfahren nach einem der Ansprüche 17 bis 19, **dadurch gekennzeichnet, dass** wenigstens ein von dem ersten Erfassungswert verschiedener zweiter Erfassungswert der ersten Erfassungsgröße erfasst und vor unbefugtem Zugriff gesichert in dem ersten Speicher (6; 6") gespeichert wird.

21. Verfahren nach einem der Ansprüche 17 bis 20, **dadurch gekennzeichnet, dass**
- wenigstens ein Erfassungswert einer zweiten Erfassungsgröße erfasst und vor unbefugtem Zugriff gesichert in dem ersten Speicher (6) gespeichert wird, wobei
- die zweite Erfassungsgröße der Verbrauch eines zweiten Verbrauchsgutes in Form eines von dem ersten Energieträger verschiedenen zweiten Energieträgers ist sowie der Erfassungswert der zweiten Erfassungsgröße ein Verbrauchswert des zweiten Energieträgers ist.

22. Verfahren nach einem der Ansprüche 17 bis 21, **dadurch gekennzeichnet, dass** die Sicherheitseinrichtung (4; 4'; 4") wenigstens einen ersten Betriebsmodus sowie einen zweiten Betriebsmodus aufweist und veranlasst durch einen Umschaltbefehl zwischen dem ersten und zweiten Betriebsmodus umgeschaltet wird.

23. Verfahren nach einem der Ansprüche 17 bis 22, **dadurch gekennzeichnet, dass** eine Quittung für einen Zugriff auf die Sicherheitseinrichtung (4) erstellt wird und die Quittung in der Sicherheitseinrichtung (4) gespeichert wird.

24. Verfahren nach einem der Ansprüche 17 bis 23, **dadurch gekennzeichnet, dass** die Anbieterkennung durch kryptographische Mittel abgesichert wird.

25. Verfahren nach Anspruch 24, **dadurch gekennzeichnet, dass** der erste Verbrauchswert verknüpft mit einer für den auswählenden Benutzer charakteristischen Benutzerkennung im ersten Speicher (6) gespeichert wird.

26. Verfahren nach einem der Ansprüche 17 bis 25, **dadurch gekennzeichnet, dass** zwischen der Sicherheitseinrichtung (4; 4'; 4") und einer von der Sicherheitseinrichtung (4; 4'; 4") entfernten Datenzentrale (15, 19; 15'; 15") eine erste Kommunikatiansverbindung hergestellt wird und die Datenzentrale (15, 19; 15'; 15") die Speicherinhalte des ersten Speichers (6; 6") über die erste Kommunikationsverbindung ausliest.

27. Verfahren nach Anspruch 26, **dadurch gekennzeichnet, dass** die Datenzentrale (15, 19; 15'; 15")
- eine Abrechnungsinformation in Abhängigkeit von den Speicherinhalten des ersten Speichers (6; 6") erstellt und/oder
- den Betriebsmodus der Sicherheitseinrichtung (4; 4'; 4") beeinflusst.

## Claims

1. Arrangement for the capturing and secure storage of at least one first capturing value of at least one first capturing magnitude having
- at least one first capturing device (3; 3'; 3") for capturing the first capturing value and
- a safety device (4; 4'; 4") connected to the first capturing device (3; 3'; 3") comprising a processing unit (5), an associated first memory (6; 6") and a first interface device (7) connected to the processing unit (5), wherein
- the safety device (4; 4'; 4") is designed to protect the storage of the first capturing value in the first memory (6; 6") against unauthorised access,
- the first interface device (7) is designed for accessing the safety device (4; 4'; 4"),
- the first capturing device (3; 3'; 3") has a capturing unit (3.1; 3.1') connected to the safety device (4; 4'; 4") which is designed to continuously capture the first capturing magnitude, and
- the processing unit (5) is designed to check access authorisation to the safety device (4; 4'; 4")
**characterised in that**
- the first capturing device (3; 3'; 3") is a consumption metering device, the first capturing magnitude is the consumption of a first consumption good in the form of a first energy carrier and the first capturing value is a first consumption value of the first energy carrier and
- the safety device (4) has a selection module (13) connected to the processing unit (5) which is designed to check a selection criterion and select a supplier of the first consumption good from a number of providers depending on the outcome of said selection criterion check, and
- the processing unit (5) is designed to store, in the first memory (6), the first consumption value in a manner linked to a supplier identifier that is characteristic of the selected supplier of the first consumption good.

2. Arrangement according to claim 1, **characterised in that** the processing unit (5) is designed to check access authorisation using cryptographic means.

3. Arrangement according to claim 1 or 2, **characterised in that** the processing unit (5) is designed to store the first capturing value in the first memory (6; 6') linked to a capturing time identifier that is characteristic of the capturing time of the first capturing value.

4. Arrangement according to any one of the preceding claims, **characterised in that**
- at least one second capturing device (20; 20") different from the first capturing device (3; 3'; 3") is provided in the form of a consumption metering device for collecting at least one second capturing value of the first capturing magnitude that is different from the first capturing value and
- the safety device (4; 4") is designed to protect the storage of the second capturing value in the first memory (6; 6") against unauthorised access.

5. Arrangement according to any one of the preceding claims, **characterised in that**
- either the first capturing device is designed to capture at least one capturing value of a second capturing magnitude
- or at least a third capturing device (21) is provided in the form of a consumption metering device for capturing at least one capturing value of a second capturing magnitude, wherein
- the second capturing magnitude is the consumption of a second consumption good in the form of a second energy carrier that is different from the first energy carrier and the capturing value of the second capturing magnitude is a consumption value of the second energy carrier,
- and the safety device (4) is designed to protect the storage of the capturing value of the second capturing magnitude in the first memory (6) against unauthorised access.

6. Arrangement according to any one of the preceding claims, **characterised in that** the processing unit (5) comprises at least one first mode of operation and one second mode of operation and is designed to switch between the first and second mode of operation in response to a switching command.

7. Arrangement according to claim 6, **characterised in that** an influencing device (3.2) connected to the processing unit (5) and controlled, at least in the second operating mode, by the processing unit (5) is provided to influence the first capturing magnitude.

8. Arrangement according to any one of the preceding claims, **characterised in that** the safety device (4) comprises an acknowledgement module (12) connected to the processing unit and having a memory (12.1), and the processing unit (5) is designed to generate an acknowledgement of access to the safety device (4) and to store the first acknowledgement in the memory (12.1) of the acknowledgement module (12).

9. Arrangement according to claim 8, **characterised in that** the processing unit (5)
- is designed to store the acknowledgement in the memory (12.1) of the acknowledgement module (12) linked to an accessing party identifier that is characteristic of the accessing party,
and/or
- is designed to store the acknowledgement in the memory (12.1) of the acknowledgement module (12) linked to an access time identifier that is characteristic of the access time.

10. Arrangement according to claim 8 or 9, **characterised in that** the processing unit (5) is designed to protect the stored acknowledgment and/or the accessing party identifier and/or the access time identifier using cryptographic means.

11. Arrangement according to any one of the preceding claims, **characterised in that** the processing unit (5) is designed to protect the supplier identifier using cryptographic means.

12. Arrangement according to claim 11, **characterised in that** the processing unit (5) is designed to store the first consumption value in the first memory (6) linked to a user identifier that is characteristic of the selecting user.

13. Arrangement according to any one of the preceding claims, **characterised in that** the safety device (4; 4'; 4") comprises a cryptographic module (8) connected to the processing unit (5) which is designed to provide the processing unit with cryptographic means using at least first cryptographic data for at least one security application, wherein the first cryptographic data is stored in a memory (8.1) of the cryptographic module (8) and comprises a first cryptographic algorithm.

14. Arrangement according to any one of the preceding claims, **characterised in that** the first capturing device (3; 3'; 3") and the safety device (4; 4'; 4") are arranged in a secure environment (14; 14'; 14") protected against unauthorised access.

15. Arrangement (1; 1'; 1") according to any one of the preceding claims, **characterised in that** the safety device (4, 4', 4") has at least one first interface device (7) connected to the processing unit (5) for accessing the safety device (4; 4'; 4 "), which is designed as a first communication device, and **in that** a data center (15, 19; 15', 15") remote from the safety device (4, 4', 4") is provided with a second communication device (16), wherein the first communication device (7) and the second communication device (16) are designed to establish a first communication connection between the safety device (4; 4'; 4") and the data center (15, 19; 15'; 15 ").

16. Arrangement according to claim 15, **characterised in that** the data center (15, 19; 15'; 15")
- is configured to read the contents of the first memory (6; 6") via the first communication link and/or
- is configured to generate billing information depending on the content of the first memory (6, 6") and/or
- is configured to influence the operating mode of the processing unit (5).

17. Method for the collection and secure storage of at least one first capturing value of at least one first capturing magnitude, wherein
- the first capturing magnitude is captured continuously and the first capturing value is stored in a safety device (4; 4'; 4"), wherein
- the first capturing value is stored in a first memory (6; 6') of the safety device (4; 4'; 4") protected against unauthorised access and
- if the safety device (4; 4'; 4") is accessed via a first interface device (7), access authorisation to the safety device (4; 4'; 4") is verified.
**characterised in that**
- the first capturing magnitude is the consumption of a first consumption good in the form of a first energy carrier and the first capturing value is a first consumption value of the first energy carrier,
- a selection criterion is checked and a supplier of the first consumption good is selected from a number of suppliers depending on the outcome of the selection criterion check and
- the first consumption value is stored in a first memory (6) in a manner linked to a supplier identifier that is characteristic of the selected supplier of the first consumption good.

18. Method according to claim 17, **characterised in that** the access authorisation is verified using cryptographic means.

19. Method according to claim 17 or 13, **characterised in that** the first capturing value, in a manner linked to a capturing time identifier that is characteristic of the capturing time of the first capturing value, is stored in the first memory (6; 6").

20. Method according to any one of claims 17 to 19, **characterised in that** at least one second capturing value of the first capturing magnitude that is different from the first capturing value is captured and stored in the first memory (6; 6") in a manner protected against unauthorised access.

21. Method according to any one of claims 17 to 20, **characterised in that**
- at least one capturing value of a second capturing magnitude is captured and stored in the first memory (6) in a manner protected against unauthorised access, wherein
- the second capturing magnitude is the consumption of a second consumption good in the form of a second energy carrier that is different from the first energy carrier and the capturing value of the second capturing magnitude is a consumption value of the second energy carrier.

22. Method according to any one of claims 17 to 21, **characterised in that** the safety device (4; 4'; 4") comprises at least one first mode and one second mode of operation and switching between the first and the second mode of operation is triggered by a switching command.

23. Method according to any one of claims 17 to 22, **characterised in that** an acknowledgement of access to the safety device (4) is generated and the acknowledgement is stored in the safety device (4).

24. Method according to any one of claims 17 to 23, **characterised in that** the supplier identifier is protected using cryptographic means.

25. Method according to claim 24, **characterised in that** the first consumption value is stored in the first memory (6) in a manner linked to a user identifier that is characteristic of the selecting user.

26. Method according to any one of claims 17 to 25, **characterised in that** a first communication link is established between the safety device (4; 4'; 4") and a data center (15, 19; 15'; 15") remote from the safety device (4; 4'; 4") and the data center (15, 19; 15'; 15") reads the content of the first memory (6, 6") via the first communication link.

27. Method according to claim 26, **characterised in that** the data center (15, 19; 15'; 15")
- generates billing information depending on the content of the first memory (6; 6") and/or
- influences the mode of operation of the safety device (4; 4'; 4").

## Revendications

1. Dispositif de détection et d'enregistrement sécurisé d'au moins une première valeur de détection d'au moins une première donnée de détection avec
- au moins un premier dispositif de détection (3; 3'; 3") pour la détection de la première valeur de détection et
- un dispositif de sécurité (4; 4'; 4") relié au premier dispositif de détection (3; 3'; 3") et comprenant une unité de traitement (5), une première mémoire associée (6; 6") ainsi qu'un premier dispositif d'interface (7) relié à l'unité de traitement (5), où
- le dispositif de sécurité (4; 4'; 4") est conçu pour l'enregistrement, sécurisé contre les accès non autorisés, de la première valeur de détection dans la première mémoire (6; 6"),
- le premier dispositif d'interface (7) est conçu pour l'accès au dispositif de sécurité (4; 4'; 4"),
- le premier dispositif de détection (3; 3'; 3") comprend une unité de détection (3.1; 3.1") reliée au dispositif de sécurité (4; 4'; 4") et conçue pour détecter en continu la première donnée de détection, et
- l'unité de traitement (5) est conçue pour la vérification de l'autorisation d'accès au dispositif de sécurité (4; 4'; 4")
**caractérisé en ce que**
- le premier dispositif de détection (3; 3'; 3") est un dispositif de mesure de consommation, la première donnée de détection représente la consommation d'un premier bien de consommation sous la forme d'un premier porteur d'énergie, et la première valeur de détection est une première valeur de consommation du premier porteur d'énergie et
- le dispositif de sécurité (4) présente un module de sélection (13), relié à l'unité de traitement (5), qui est conçu pour vérifier un critère de sélection et pour sélectionner, en fonction du résultat de cette vérification, un fournisseur du premier bien de consommation parmi un certain nombre de fournisseurs, et
- l'unité de traitement (5) est conçue pour l'enregistrement de la première valeur de consommation dans la première mémoire (6) de manière associée à un identificateur de fournisseur identifiant le fournisseur sélectionné du premier bien de consommation.

2. Dispositif selon la revendication 1, **caractérisé en ce que** l'unité de traitement (5) est conçue pour la vérification de l'autorisation d'accès par des moyens cryptographiques.

3. Dispositif selon la revendication 1 ou 2, **caractérisé en ce que** l'unité de traitement (5) est conçue pour l'enregistrement de la première valeur de détection dans la première mémoire (6; 6") de manière associée à un identificateur de temps de détection caractérisant le temps de détection de la première valeur de détection.

4. Dispositif selon une quelconque des revendications précédentes, **caractérisé en ce que**
- au moins un deuxième dispositif de détection (20; 20") est prévu sous la forme d'un dispositif de mesure de consommation, différent du premier dispositif de détection (3; 3'; 3"), pour la détection d'au moins une deuxième valeur de détection de la première donnée de détection différente de la première valeur de détection, et
- le dispositif de sécurité (4; 4") est conçu pour l'enregistrement, sécurisé contre les accès non autorisés, de la deuxième valeur de détection dans la première mémoire (6; 6").

5. Dispositif selon une quelconque des revendications précédentes, **caractérisé en ce que**
- soit le premier dispositif de détection est conçu pour la détection d'au moins une valeur de détection d'une deuxième donnée de détection,
- soit au moins un troisième dispositif de détection (21) sous la forme d'un dispositif de mesure de consommation est prévu pour la détection d'au moins une valeur de détection d'une deuxième donnée de détection, où
- la deuxième donnée de détection représente la consommation d'un deuxième bien de consommation sous la forme d'un deuxième porteur d'énergie différent du premier porteur d'énergie, et la valeur de détection de la deuxième donnée de détection est une valeur de consommation du deuxième porteur d'énergie,
- et le dispositif de sécurité (4) est conçu pour l'enregistrement, sécurisé contre les accès non autorisés, de la valeur de détection de la deuxième donnée de détection dans la première mémoire (6).

6. Dispositif selon une quelconque des revendications précédentes, **caractérisé en ce que** l'unité de traitement (5) présente au moins un premier mode de fonctionnement ainsi qu'un deuxième mode de fonctionnement et est conçue pour la commutation entre le premier et le deuxième mode de fonctionnement, déclenchée par une commande de commutation.

7. Dispositif selon la revendication 6, **caractérisé en ce qu'**un dispositif d'influence (3.2) relié à l'unité de traitement (5) et contrôlé par l'unité de traitement (5) au moins dans le deuxième mode de fonctionnement est prévu pour influencer la première donnée de détection.

8. Dispositif selon une quelconque des revendications précédentes, **caractérisé en ce que** le dispositif de sécurité (4) comprend un module d'accusé de réception (12) relié à l'unité de traitement et ayant une mémoire (12.1), et l'unité de traitement (5) est conçue pour établir un accusé de réception pour un accès au dispositif de sécurité (4) et pour l'enregistrement du premier accusé de réception dans la mémoire (12.1) du module d'accusé de réception (12).

9. Dispositif selon la revendication 8, **caractérisé en ce que** l'unité de traitement (5)
- est conçue pour l'enregistrement de l'accusé de réception dans la mémoire (12.1) du module d'accusé de réception (12) de manière associé à un identificateur d'utilisateur accédant identifiant l'utilisateur qui accède au système.
et/ou
- est conçue pour l'enregistrement de l'accusé de réception dans la mémoire (12.1) du module d'accusé de réception (12) de manière associé à un identificateur de temps d'accès caractérisant le temps d'accès au système.

10. Dispositif selon la revendication 8 ou 9, **caractérisé en ce que** l'unité de traitement (5) est conçue pour la protection de l'accusé de réception enregistré et/ou de l'identificateur d'utilisateur accédant et/ou de l'identificateur de temps d'accès par des moyens cryptographiques.

11. Dispositif selon une quelconque des revendications précédentes, **caractérisé en ce que** l'unité de traitement (5) est conçue pour la protection de l'identificateur de fournisseur par des moyens cryptographiques.

12. Dispositif selon la revendication 11, **caractérisé en ce que** l'unité de traitement (5) est conçue pour l'enregistrement de la première valeur de consommation dans la première mémoire (6) de manière associée à un identificateur d'utilisateur caractérisant l'utilisateur procédant à la sélection.

13. Dispositif selon une quelconque des revendications précédentes, **caractérisé en ce que** le dispositif de sécurité (4; 4'; 4") comprend un module cryptographique (8) relié à l'unité de traitement (5), qui est conçu pour mettre des moyens cryptographiques à la disposition de l'unité de traitement pour au moins une application de sécurité, en utilisant au moins des premières données cryptographiques, où les premières données cryptographiques sont enregistrées dans une mémoire (8.1) du module cryptographique (8) et comprennent un premier algorithme cryptographique.

14. Dispositif selon une quelconque des revendications précédentes, **caractérisé en ce que** le premier dispositif de détection (3; 3'; 3") et le dispositif de sécurité (4; 4'; 4") sont disposés dans un environnement sécurisé (14; 14'; 14") protégé contre les accès non autorisés.

15. Dispositif (1; 1'; 1") selon une quelconque des revendications précédentes, **caractérisé en ce que** le dispositif de sécurité (4; 4'; 4") présente au moins un premier dispositif d'interface (7) relié à l'unité de traitement (5) pour l'accès au dispositif de sécurité (4; 4'; 4"), qui est conçu comme un premier dispositif de communication, et qu'un centre de données (15, 19; 15'; 15") distant du dispositif de sécurité (4; 4'; 4") est prévu avec un deuxième dispositif de communication (16), où le premier dispositif de communication (7) et le deuxième dispositif de communication (16) sont conçus pour créer une première liaison de communication entre le dispositif de sécurité (4; 4'; 4") et le centre de données (15, 19; 15'; 15").

16. Dispositif selon la revendication 15, **caractérisé en ce que** le centre de données (15, 19; 15'; 15")
- est conçu pour lire les enregistrements de la première mémoire (6; 6") via la première liaison de communication, et/ou
- est conçue pour produire des données de facturation en fonction des enregistrements de la première mémoire (6; 6'), et/ou
- est conçu pour influencer le mode de fonctionnement de l'unité de traitement (5).

17. Procédé de détection et d'enregistrement sécurisé d'au moins une première valeur de détection d'au moins une première donnée de détection, où
- la première donnée de détection est détectée en continue et la première valeur de détection est enregistrée dans un dispositif de sécurité (4; 4'; 4"), où
- la première valeur de détection est enregistrée, de manière sécurisée contre les accès non autorisés, dans une première mémoire (6; 6") du dispositif de sécurité (4; 4'; 4"), et
- lors d'un accès au dispositif de sécurité (4; 4'; 4") via un premier dispositif d'interface (7), une vérification de l'autorisation d'accès au dispositif de sécurité (4; 4'; 4") s'effectue,
**caractérisé en ce que**
- la première donnée de détection représente la consommation d'un premier bien de consommation sous la forme d'un premier porteur d'énergie, et la première valeur de détection représente une première valeur de consommation du premier porteur d'énergie,
- un critère de sélection est vérifié et en fonction du résultat de cette vérification, un fournisseur du premier bien de consommation est sélectionné parmi un certain nombre de fournisseurs, et
- la première valeur de consommation est enregistrée dans la première mémoire (6) de manière associée à un identificateur de fournisseur caractérisant le fournisseur sélectionné du premier bien de consommation.

18. Procédé selon la revendication 17, **caractérisé en ce que** la vérification de l'autorisation d'accès s'effectue par des moyens cryptographiques.

19. Procédé selon la revendication 17 ou 18, **caractérisé en ce que** la première valeur de détection, associée à un identificateur de temps de détection caractérisant l'heure de détection de la première valeur de détection, est enregistrée dans la première mémoire (6; 6").

20. Procédé selon une quelconque des revendications 17 à 19, **caractérisé en ce qu'**au moins une deuxième valeur de détection différente de la première valeur de détection est détectée et enregistrée dans la première mémoire (6; 6") de manière sécurisée contre les accès non autorisés.

21. Procédé selon une quelconque des revendications 17 à 20, **caractérisé en ce que**
- au moins une valeur de détection d'une deuxième donnée de détection est détectée et enregistrée dans la première mémoire (6) de manière sécurisée contre les accès non autorisés, où
- la deuxième donnée de détection représente la consommation d'un deuxième bien de consommation sous la forme d'un deuxième porteur d'énergie différent du premier porteur d'énergie, et la valeur de détection de la deuxième donnée de détection représente une valeur de consommation du deuxième porteur d'énergie.

22. Procédé selon une quelconque des revendications 17 à 21, **caractérisé en ce que** le dispositif de sécurité (4; 4'; 4") présente au moins un premier mode de fonctionnement ainsi qu'un deuxième mode de fonctionnement et commute entre le premier et le deuxième mode de fonctionnement par une commande de commutation.

23. Procédé selon une quelconque des revendications 17 à 22, **caractérisé en ce qu'**un accusé de réception pour un accès au dispositif de sécurité (4) est établi et enregistré dans le dispositif de sécurité (4).

24. Procédé selon une quelconque des revendications 17 à 23, **caractérisé en ce que** l'identificateur de fournisseur est protégé par des moyens cryptographiques.

25. Procédé selon la revendication 24, **caractérisé en ce que** la première valeur de consommation est enregistrée dans la première mémoire (6) de manière associée à un identificateur d'utilisateur caractérisant l'utilisateur procédant à la sélection.

26. Procédé selon une quelconque des revendications 17 à 25, **caractérisé en ce qu'**une première liaison de communication est créée entre le dispositif de sécurité (4; 4'; 4") et un centre de données (15, 19; 15'; 15") distant du dispositif de sécurité (4; 4'; 4") et le centre de données (15, 19; 15'; 15") lit les enregistrements de la première mémoire (6; 6") via la première liaison de communication.

27. Procédé selon la revendication 26, **caractérisé en ce que** le centre de données (15, 19; 15'; 15")
- produit des données de facturation en fonction des enregistrements de la première mémoire (6; 6") et/ou
- influence le mode de fonctionnement du dispositif de sécurité (4; 4'; 4").
